(19) Europäisches Patentamt
European Patent Office
Office européen des brevets

(11) **EP 4 398 188 A1**

(12) **EUROPEAN PATENT APPLICATION**

(43) Date of publication:
**10.07.2024 Bulletin 2024/28**

(21) Application number: **23150473.9**

(22) Date of filing: **05.01.2023**

(51) International Patent Classification (IPC):
**G06T 7/11** (2017.01)       **G06T 7/136** (2017.01)
**G06T 7/60** (2017.01)       **G06T 7/00** (2017.01)
**G06T 5/00** (2024.01)

(52) Cooperative Patent Classification (CPC):
**G06T 7/11; G06T 5/73; G06T 5/92; G06T 7/001;
G06T 7/136; G06T 7/60;** G06T 2207/20056;
G06T 2207/30041

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **2438799 Alberta LTD.
Calgary AB T3H 5M3 (CA)**

(72) Inventors:
• LAVOIE, Benjamin R.
  Calgary, T3R 0E6 (CA)
• OLOUMI, Faraz
  Calgary, T3H 5M3 (CA)
• RANGAYYAN, Rangaraj M.
  Calgary, T3L 1T8 (CA)

(74) Representative: **Vossius & Partner
Patentanwälte Rechtsanwälte mbB
Siebertstraße 3
81675 München (DE)**

(54) **VESSEL RECOGNITION USING WEIGHTED GABOR TECHNIQUE**

(57)     The invention relates to a computer-implemented method for generating a (multi-scale) Gabor filter response by a weighting step to be indicative of spatial and/or geometric vessel properties in a vascular image. The generated Gabor filter response may be used for segmenting vessels, extracting features of vessels and/or classifying the image quality of a vascular image. The method may comprise further (pre-) processing steps such as adjusting gamma values and/or applying unsharp masking. The invention further relates to a storage device, a server and/or a capturing system comprising the computer-implemented method of the invention.

EP 4 398 188 A1

Fig.1

**Description**

The invention relates to a computer-implemented method for generating a (multi-scale) Gabor filter response by a weighting step to be indicative of spatial and/or geometric vessel properties in a vascular image. The generated Gabor filter response may be used for segmenting vessels, extracting features of vessels and/or classifying the image quality of a vascular image. The method may comprise further (pre-) processing steps such as adjusting gamma values, applying unsharp masking, thresholding and/or generating a local intensity variance map. The invention further relates to a storage device, a server and/or a capturing system comprising the computer-implemented method of the invention.

Vessel detection in vascular images is a crucial task in medical image analysis, as it can provide important information about the health of an individual's vascular system and help diagnose various diseases such as vision-related diseases as well as cardiovascular diseases and even diabetes.

The state of the art in vessel detection in vascular images involves the use of a variety of methods, including machine-learning algorithms, image-processing techniques, and other computational methods. These methods are designed to identify and extract vessel structures from images, often by identifying patterns in the intensity, texture, or shape of the vessels.

One major problem that is currently not addressed in the field of vessel detection is the challenge of dealing with complex and variable vessel shapes and patterns. Vascular images can be highly variable, with vessels exhibiting a wide range of patterns, sizes, and orientations. This can make it difficult for automated algorithms to accurately detect and classify vessels, especially in cases where the vessels are partially occluded or have non-uniform intensity or texture.

Another issue is the challenge of dealing with low signal-to-noise ratios (i.e., low-vascular contrast) in vascular images. Many vascular images, especially those taken using non-invasive imaging modalities such as ultrasound, have low signal-to-noise ratios, which can make it difficult to accurately detect and classify vessels. This can be especially problematic in cases where the vessels are small or have low contrast with the surrounding tissue.

Thus, there is a need for improvement of detection and/or characterization of vessel properties in vascular images.

The above technical problem is solved by the embodiments disclosed herein and as defined in the claims.

Accordingly, the invention relates to, inter alia, the following embodiments:

1. A computer-implemented method for generating a multi-scale Gabor filter response indicative of spatial and/or geometric vessel properties in a vascular image, the method comprising the steps of:

    a) retrieving a plurality of pixels of interest of a vascular image;

    b) applying a multi-scale Gabor filter to the pixels of interest to obtain at least a first and a second Gabor filter response, wherein the Gabor filter response comprises an individual Gabor filter response of each pixel of interest and wherein the multiscale Gabor filter comprises:

        i) a first Gabor filter comprising a first Tau and a first El; and

        ii) a second Gabor filter comprising a second Tau and a second El; wherein the first Tau differs from the second Tau and/or wherein the first El differs from the second El;

    c) determining a weighting factor based on a Tau- and/or El-dependent filter characteristic;

    d) obtaining a weighed Gabor filter response by weighting at least one of the individual Gabor filter responses of at least one of the Gabor filter responses based on the weighting factor; and

    e) generating a multi-scale Gabor filter response indicative of the spatial and/or geometric vessel properties in the vascular image by combining and/or selecting individual Gabor filter magnitudes from at least two Gabor filter responses, wherein at least one of the Gabor filter responses is the weighted Gabor filter response.

2. The method of embodiment 1, wherein the method comprises a step of selecting Tau and/or El based on a vascular image property, preferably wherein the vascular image property is at least one selected from the group consisting of: image size, magnification level and estimated noise.

3. The method of embodiment 1 or 2, wherein the method comprises a step of scaling the vascular image and/or removing artefacts in the vascular image to obtain the pixels of interest of the vascular image.

4. The method of any one of embodiments 1 to 3, wherein the method comprises a step of adjusting gamma values of the vascular image, preferably wherein the method comprises a step of a) adjusting gamma values of the vascular image; and b) applying noise filtering and/or unsharp masking.

5. The method of any one of embodiments 1 to 4, wherein the Tau- and/or EI-dependent filter characteristic comprises or consists of mean frequency and/or peak frequency.

6. A method for segmenting vessels in a vascular image, the method comprising the steps of:

a) retrieving and/or generating a multi-scale Gabor filter response according to the method of any one of embodiments 1 to 5,

b) segmenting a vessel in the vascular image applying a segmentation algorithm to the multi-scale Gabor filter response.

7. The method of embodiment 6, wherein the segmentation algorithm comprises a thresholding algorithm.

8. The method of embodiment 7, wherein the thresholding algorithm comprises generating a local intensity variance map, wherein the local intensity variance map is determined by comparing the contrast between a smaller pixel intensity window and a lager pixel intensity window of a relevant pixel of the vascular image, wherein the pixel intensity windows are indicative of the brightness of an area surrounding the relevant pixel of the vascular image.

9. A method for extracting features of vessels in a vascular image, the method comprising the steps of:

a) retrieving and/or generating a multi-scale Gabor filter response according to the method of any one of embodiments 1 to 5, and/or segmenting vessels in a vascular image according to the method of any one of embodiments 6 to 8; and

b) extracting features of the vessels in the vascular image by interpreting the multi-scale Gabor filter response and/or the segments.

10. A computer-implemented method for classification of the quality of a vascular image, the method comprising the steps of:

a) determining an image quality pattern of a vascular image based on a multi-scale Gabor filter response, a segmented vessel and/or an extracted feature; wherein the multi-scale Gabor filter response is generated according to the method of any one of embodiments 1 to 5, the segmented vessel is segmented according to the method of any one of embodiments 6 to 8 and the extracted feature is extracted according to the method of embodiment 9; preferably based on i) the multi-scale Gabor filter response, the segmented vessels and/or the extracted feature, and ii) at least one metric of the vascular image selected from the group consisting of: sharpness metric, a brightness metric, and a contrast metric, wherein the sharpness metric comprises determining in at least two areas in the vascular image a spatial orientation of edges and frequency variation, wherein frequency variation is the variation in at least a part of the frequency domain of the image, the brightness metric, wherein the brightness metric is indicative of brightness-derived quality parameters and comprises determining non-uniformity of the brightness of the image, and the contrast metric comprises determining a global contrast;

b) comparing the image quality pattern obtained in (a) with a predefined image quality threshold pattern, wherein the quality threshold pattern comprises at least one threshold and/or a classification model comprising or consisting of a set of weights; and

c) classifying the quality of the vascular image, wherein the image quality is classified based on the comparison of (b), in particular wherein the image quality is classified as having high quality if the image quality pattern is above the predefined image quality threshold pattern and wherein the image quality is classified as having low quality if the image quality pattern is below the predefined image quality threshold pattern.

11. A computer-implemented method for correction of the quality of a vascular image, the method comprising the steps of:

i. retrieving a vascular image classified as having low quality according to the method of embodiment 10;

ii. retrieving or determining a multi-scale Gabor filter response, a segmented vessel and/or an extracted feature; wherein the multi-scale Gabor filter response is generated according to the method of any one of embodiments 1 to 5 and the segmented vessel is segmented according to the method of any one of embodiments 6 to 8 and the extracted feature is extracted according to the method of embodiment 9; preferably retrieving or determining I) the multi-scale Gabor filter response, the segmented vessels and/or the extracted feature and II) a sharpness metric, a brightness metric, and/or a contrast metric of the vascular image, wherein the sharpness metric comprises determining of a spatial orientation and frequency variation of at least two areas in the vascular image, the brightness metric comprises comparing brightness values of the vascular image to a brightness reference image, and the contrast metric comprises determining a global contrast;

iii. comparing the multi-scale Gabor filter response, the segmented vessels and/or the extracted feature to an enhancement threshold pattern; preferably comparing the I) the multi-scale Gabor filter response, the segmented vessels and/or the extracted feature and II) the sharpness metric, the brightness metric, and/or the contrast metric to an enhancement threshold pattern;

iv. correcting the quality of the vascular image by employing, at least one technique selected from the group of sharpness correction, brightness correction, and contrast correction; wherein the selection of the technique is based on the comparison in step ii).

12. A computer-implemented method for classification of quality enhanceability of a vascular image, the method comprising the steps of:

i. retrieving a vascular image that is corrected according to the method of embodiment 11;

ii. determining a corrected image quality pattern of the corrected vascular image based on a multi-scale Gabor filter response, a segmented vessel and/or an extracted feature; wherein the multi-scale Gabor filter response is generated according to the method of any one of embodiments 1 to 5 and the segmented vessel is segmented according to the method of any one of embodiments 6 to 8 and the extracted feature is extracted according to the method of embodiment 9; preferably retrieving or determining I) the multi-scale Gabor filter response, the segmented vessels and/or the extracted feature and II) a sharpness metric, a brightness metric, and/or a contrast metric of the corrected vascular image, wherein the sharpness metric comprises determining a spatial orientation and frequency variation of at least two areas in the vascular image, the brightness metric comprises comparing the brightness values of the corrected vascular image to a brightness reference image; and the contrast metric comprises determining global contrast;

iii. comparing the difference between the corrected image quality pattern and the image quality pattern to an enhanceability threshold pattern; and

iv. classifying quality enhanceability of the vascular image, wherein the vascular image is classified based on the comparison of step (iii), in particular wherein the vascular image is classified as enhanceable if the difference in step (iii) is above the enhanceability threshold pattern and wherein the vascular image is classified as not enhanceable if the difference in step (iii) is below the enhanceability threshold pattern.

13. A computer-implemented method for classification of the quality of a vascular image, the method comprising the steps of:

I. classifying the quality of a vascular image according to the method of embodiment 10;

II. correcting the quality of the vascular image according to the method of embodiment 11, if the vascular image is classified as having low quality according to step I.;

III. classifying the quality of the corrected vascular image according to the method of embodiment 10, if the vascular image is classified as having low quality according to step I.; and

IV. classifying the vascular image as having good quality if the vascular image and/or the corrected vascular image are/is classified as having high quality.

14. The computer-implemented method of embodiment 13, the method comprising the steps of:

1) classifying quality enhanceability of the corrected vascular image according to the method of embodiment 12, if the vascular image was classified as having low quality according to step I. of embodiment 13; and

2) classifying the vascular image as having enhanceable quality if the vascular image and the corrected vascular image are determined as having low quality and the corrected vascular image is classified as enhanceable in step 1).

15. The computer-implemented method of embodiment 13 or 14, the method further comprising the steps of:

I. classifying quality enhanceability of the corrected vascular image according to the method of embodiment 12; and

II. correcting the quality of the corrected vascular image according to the method of embodiment 11 if the corrected vascular image is classified as enhanceable in step IV) and repeating the correction of the corrected vascular image quality image according to the method of embodiment 11, the classification of the quality of the corrected vascular image according to the method of embodiment 10 and the classification of the quality enhanceability of the corrected vascular image according to the method of embodiment 12 until the corrected vascular image is not classified as enhancable according to the method of embodiment 12.

16. A computer-implemented method for obtainment of a quality enhanced vascular image, the method comprising the steps of:

i. correcting the quality of a vascular image according to the method of embodiment 11;

ii. classifying quality in the corrected vascular image according to the method of embodiment 10;

iii. obtaining the quality enhanced vascular image by storing the corrected vascular image if the image is classified as having high quality in step ii).

17. The computer-implemented method of embodiment 16, the method further comprising the steps of:

1. classifying quality enhanceability of the corrected vascular image according to the method of embodiment 12 if the corrected vascular image is classified as having low quality in step ii);

2. correcting the quality of the corrected vascular image according to the method of embodiment 11 and repeating the correction if the corrected vascular image remains being classified as enhanceable.

18. The computer-implemented method for classification according to any one of the embodiments 10, 12 to 15, the computer-implemented method for correction according to embodiment 11 or the computer-implemented method for obtainment according to embodiment 16 or 17, wherein the brightness metric determination comprises the steps of:

a) segmentation of the vascular image;

b) comparison of a segment to a segment reference pattern; and

c) determining based whether the brightness of the segment is indicative of anatomical brightness or quality-related brightness alterations.

19. The computer-implemented method for classification according to embodiment 18, the computer-implemented method for correction according to embodiment 18 or the computer-implemented method for obtainment according to embodiment 18, wherein the segment is a segment with having an abnormal brightness level, wherein an abnormal brightness level is a brightness level below a minimal brightness threshold value or a brightness level above a maximal brightness threshold value.

20. The computer-implemented method for classification according to embodiment 18 or 19, the computer-implemented method for correction according to embodiment 18 or 19 or the computer-implemented method for obtainment according to embodiment 18 or 19, wherein the brightness metric comprises the segmentation of the vascular image comprises using a fuzzy membership function and/or region growing segmentation.

21. The computer-implemented method for classification according to any one of the embodiments 10, 12 to 15, 18 to 20, the computer-implemented method for correction according to embodiment 11, 18 to 20 or the computer-implemented method for obtainment according to any one of embodiments 16 to 20, wherein the brightness metric comprises homomorphic filtering.

22. The computer-implemented method for classification according to any one of the embodiments 10, 12 to 15, 18 to 21, the computer-implemented method for correction according to embodiment 11, 18 to 21 or the computer-implemented method for obtainment according to any one of embodiments 16 to 21 wherein the brightness metric comprises comparing at least part of the brightness metrics of the vascular image to a brightness reference image, preferably comparing the radial spectral power density to a reference image.

23. The computer-implemented method for classification according to any one of the embodiments 10, 12 to 15, 18 to 22, the computer-implemented method for correction according to any one of the embodiments 11, 18 to 22 or the computer-implemented method for obtainment according to any one of the embodiments 16 to 22, wherein the brightness metric comprises determining a Fourier transformation of the vascular image, wherein a frequencies above a Fourier transformation frequency threshold contribute more to the brightness metric than the frequencies below the Fourier transformation frequency threshold, preferably wherein frequencies below the Fourier transformation frequency threshold are excluded from the brightness metric computation.

24. The computer-implemented method for classification according to embodiment 23, the computer-implemented method for correction according to embodiment 23, or the computer-implemented method for obtainment according to embodiment 23, wherein the brightness metric comprises determining at least one brightness metric selected from the group of angular spectral power density, image moment, histogram metric and radial spectral power density.

25. The computer-implemented method for classification according to any one of the embodiments 10, 12 to 15, 18 to 24, the computer-implemented method for correction according to any one of the embodiments 11, 18 to 24, or the computer-implemented method for obtainment according to any one of the embodiments 16 to 24, wherein determining the contrast metric comprises comparison of the intensity distributions of a foreground and a background region.

26. The computer-implemented method for classification according to embodiment 25, the computer-implemented method for correction according to embodiment 25 or the computer-implemented method for obtainment according to embodiment 25, or the computer-implemented method for obtainment according to embodiment 25, wherein the foreground region of the vessel contrast are the vessels and the background regions of the vessel contrast are regions adjacent to the vessels, wherein each foreground region has a corresponding background region with at least 50% of the area of the foreground region, preferably wherein each background region covers all borders of the foreground region.

27. The computer-implemented method for classification according to embodiment 25 or 26, the computer-implemented method for correction according to embodiment 25 or 26 or the computer-implemented method for obtainment according to embodiment 25 or 26, or the computer-implemented method for obtainment according to embodiment 25 or 26, wherein determining the contrast metric comprises determining a Jeffries Matusita Distance and/or Jensen-Shannon Divergence between the foreground and the background region.

28. The computer-implemented method for classification according to any one of the embodiments 10, 12 to 15, 18 to 27, the computer-implemented method for correction according to any one of the embodiments 11, 18 to 27, or the computer-implemented method for obtainment according to any one of the embodiments 16 to 27, wherein global contrast is determined using at least 50% of the pixels of the image.

29. The computer-implemented method for classification according to any one of the embodiments 10, 12 to 15, 18 to 28, the computer-implemented method for correction according to any one of the embodiments 11, 18 to 28, or the computer-implemented method for obtainment according to any one of the embodiments 16 to 28, wherein determining the contrast metric comprises determining super-pixel segments, and/or lesion segments.

30. The computer-implemented method for classification according to embodiment 29, the computer-implemented method for correction according to embodiment 29, or the computer-implemented method for obtainment according to embodiment 29, wherein the super-pixel segments are non-overlapping clusters of pixels clustered based on

a) color similarity or intensity similarity; and

b) distance from a seed pixel.

31. The computer-implemented method for classification according to embodiment 30, the computer-implemented method for correction according to embodiment 30 or the computer-implemented method for obtainment according to embodiment 30, wherein the foreground regions are super-pixel segments and the background regions are regions adjacent to the foreground region, wherein each foreground region has a corresponding background region with at least 50% of the area of the foreground region, preferably wherein each background region covers all borders of the foreground region.

32. The computer-implemented method for classification according to any one of the embodiments 10, 12 to 15, 18 to 31, the computer-implemented method for correction according to any one of the embodiments 11, 18 to 31, or the computer-implemented method for obtainment according to any one of the embodiments 16 to 31, wherein the Laplacian Energy of at least one vessel segment and/or in at least one lesion segment is determined.

33. The computer-implemented method for classification according to any one of the embodiments 10, 12 to 15, 18 to 32, the computer-implemented method for correction according to any one of the embodiments 11, 18 to 32, or the computer-implemented method for obtainment according to any one of the embodiments 16 to 32, wherein sharpness metric comprises determining a Fourier transformation of the vascular image, wherein a band of frequency of the Fourier transform contributes more to the sharpness metric than the frequencies higher and lower than the band of frequency of the Fourier transform, preferably wherein frequencies higher and lower than the band of frequency of the Fourier transform are excluded from sharpness metric computation.

34. The computer-implemented method for classification according to embodiment 33, the computer-implemented method for correction according to embodiment 33, or the computer-implemented method for obtainment according to embodiment 33, wherein the sharpness comprises at least one sharpness metric selected from the group of L* channel metric, angular spectral power density, and radial spectral power density, wherein the L* channel the L* channel of the CIELAB color space and wherein the angular spectral power density and radial spectral power density are determined from the frequency response on the vascular image.

35. The computer-implemented method for classification according to embodiment 34, the computer-implemented method for correction according to embodiment 34, or the computer-implemented method for obtainment according to embodiment 34, wherein the radial spectral power density is used to determine generalized extreme value distribution.

36. The computer-implemented method for classification according to embodiment 34 or 35, the computer-implemented method for correction according to embodiment 34 or 35, or the computer-implemented method for obtainment according to embodiment 34 or 35, wherein the radial spectral power density is used to determine fractional power in at least one vessel segment.

37. The computer-implemented method for classification according to any of the embodiments 34 to 36, the computer-implemented method for correction according to any of the embodiments 34 to 36, or the computer-implemented method for obtainment according to any of the embodiments 34 to 36, wherein the L* channel metric is an L* channel-derived Form Factor and/or L* channel-derived Laplacian Energy, wherein the L* channel-derived Form Factor is a measure of the relative L* channel variation between a 2D spatial signal and its first and second derivatives and wherein the Laplacian Energy is a measure of content in a high-frequency band of the image.

38. The computer-implemented method for classification according to any one of the embodiments 10, 12 to 15, 18 to 37, the computer-implemented method for correction according to any one of the embodiments 11, 18 to 37 or the computer-implemented method for obtainment according to any one of the embodiments 16 to 37, wherein the vascular image is a retinal image.

39. The computer-implemented method for classification according to embodiment 38, the computer-implemented method for correction according to embodiment 38, or the computer-implemented method for obtainment according to embodiment 38, wherein the sharpness metric, the brightness metric, and/or the contrast metric is/are determined in a field of view mask area of the retinal image.

40. The computer-implemented method for classification according to embodiment 39, the computer-implemented method for correction according to embodiment 39 or the computer-implemented method for obtainment according to embodiment 39, wherein the method comprises a step of extending the field of view mask area.

41. The computer-implemented method for classification according to any one of the embodiments 38 to 40, the computer-implemented method for correction according to any one of the embodiments 38 to 40, or the computer-implemented method for obtainment according to any one of the embodiments 38 to 40, wherein the contrast metric comprises determining an optic nerve head segmentation.

42. A storage device comprising in form of computer executable instructions the computer-implemented method for classification according to any one of the embodiments 10, 12 to 15, 18 to 41, the computer-implemented method for correction according to any one of the embodiments 11, 18 to 41 and/or the computer-implemented method for obtainment according to any one of the embodiments 16 to 41.

43. A server comprising the storage device of embodiment 42 and at least one processing device capable of executing computer execution instructions and a network connection for receiving data indicative for the vascular image.

44. A system for capturing a quality-classified vascular image, wherein the system comprises

    a) an image capturing device; and

    b)

        i) at least one processing device capable of executing computer execution instructions and the storage device of embodiment 42; and/or

        ii) a network connection to a server according to embodiment 43.

Accordingly, in one embodiment, the invention relates to a computer-implemented method for generating a multi-scale orientation-sensitive filter response indicative of spatial and/or geometric vessel properties in a vascular image, the method comprising the steps of: a) retrieving a plurality of pixels of interest of a vascular image; b) applying a multi-scale orientation-sensitive filter to the pixels of interest to obtain at least a first and a second orientation-sensitive filter response, wherein the orientation-sensitive filter response comprises an individual orientation-sensitive filter response of each pixel of interest and wherein the multi-scale orientation-sensitive filter comprises: i) a first orientation-sensitive filter comprising a first filter characteristic; and ii) a second orientation-sensitive filter comprising a second filter characteristic; wherein the first filter characteristic differs from the second filter characteristic; c) determining a weighting factor based on the difference in the first and second filter characteristic; d) obtaining a weighed orientation-sensitive filter response by weighting at least one of the individual orientation-sensitive filter responses of at least one of the orientation-sensitive filter responses based on the weighting factor; and e) generating a multi-scale orientation-sensitive filter response indicative of the spatial and/or geometric vessel properties in the vascular image by combining and/or selecting individual orientation-sensitive filter magnitudes from at least two orientation-sensitive filter responses, wherein at least one of the orientation-sensitive filter responses is the weighted orientation-sensitive filter response. The orientation-sensitive filter is preferably a directionally selective bandpass filter such as a Gabor filter.

Accordingly, in further embodiments, the invention relates to a computer-implemented method for generating a multi-scale Gabor filter response indicative of spatial and/or geometric vessel properties in a vascular image, the method comprising the steps of: a) retrieving a plurality of pixels of interest of a vascular image; b) applying a multi-scale Gabor filter to the pixels of interest to obtain at least a first and a second Gabor filter response, wherein the Gabor filter response comprises an individual Gabor filter response of each pixel of interest and wherein the multiscale Gabor filter comprises: i) a first Gabor filter comprising a first Tau and a first El; and ii) a second Gabor filter comprising a second Tau and a second El; wherein the first Tau differs from the second Tau and/or wherein the first El differs from the second El; c) determining a weighting factor based on a Tau- and/or El-dependent filter characteristic; d) obtaining a weighed Gabor filter response by weighting at least one of the individual Gabor filter responses of at least one of the Gabor filter responses based on the weighting factor; and e) generating a multi-scale Gabor filter response indicative of the spatial and/or geometric vessel properties in the vascular image by combining and/or selecting individual Gabor filter magnitudes from at least two Gabor filter responses, wherein at least one of the Gabor filter responses is the weighted Gabor filter response.

The phrase "Gabor filter response indicative of spatial and/or geometric vessel properties in a vascular image", as used herein, refers to a Gabor filter response useful to indicate spatial and/or geometric vessel properties in a vascular image to the skilled person. For example, the Gabor filter response can be a visualization, a representation matrix and/or binary map (e.g., after thresholding the filter response) indicating spatial and/or geometric vessel properties in a vascular image. A Gabor filter is an orientation sensitive filter that can be constructed by combining a sinusoidal wave with a Gaussian function. The sinusoidal wave represents the frequency content of the filter, while the Gaussian function controls the spatiality of the filter. In some embodiments, the Gabor filter described herein is a traditional Gabor filter. In some embodiments, the Gabor filter described herein is a modified Gabor filter. In certain embodiments, the spatial and/or geometric vessel properties are at least one property selected from the group consisting of: edge of a vessel, shape of a vessel, texture of a vessel and area of a vessel.

The term "vascular image", as used herein, refers to any image of vascularized tissue. A vascularized tissue described herein is a tissue that comprises vessels that can carry blood or other liquids. In some embodiments, the vascularized tissue described herein is an organ or part of an organ selected from the group of eye, heart, brain, lung, kidney, liver, pancreas, and spleen. In other embodiments, the vascularized tissue is an in vitro tissue such as an organoid or a part thereof. A vascular image can be in the format of, but is not limited to, a JPEG image, a PNG image, image, a TIFF image, or any other digital image format known in the art. In some embodiments, the vascular image described herein is an uncompressed vascular image. In some embodiments, the vascular image described herein is a compressed vascular image. "Image" is used herein interchangeably with "photograph". In some embodiments, the vascular image described herein comprises values associated with red, green, and blue (RGB) image contributions; cyan, blue, and magenta values (CMB); hue, saturation, lightness (brightness) (HSL); hue, saturation, and value (HSV); lightness "L", green-magenta "A", and blue-yellow "B" (LAB); or other values such as YCbCr; or Y'CbCr. In some embodiments, the vascular image described herein is part of a series of images, a video and/or a (live) stream of an imaging instrument. In some embodiments, the vascular image comprises additional data referring to parameters of the subjects and/or parameters of a disease of a subject of which the vascular image is/was obtained. Such vascular images are typically obtained by capturing the vascularized tissue with a visible, infrared, or other capture device, typically a camera. In some embodiments, the vascular image represents a distribution of electromagnetic radiation at an image plane formed by an imaging lens.

The term "pixels of interest", as used herein in the context of vascular images, refers to (certain or all) pixels of the vascular image in which the skilled person can expect (a) vessel(s) to be present. For example, the "pixels of interest" may be all pixels of a vascular image or all pixels excluding artefacts. Artefacts may be excluded from the image (e.g., by limiting to the field of view mask area) or replaced based on the non-artefact pixels of the vascular image (e.g. by extending the field of view mask). The skilled person may employ other preprocessing steps (e.g., processing steps described herein or processing steps known in the art) to obtain the pixels of interest from the vascular image. These processing steps may for example be used reduce computing resource requirements or to remove structures such as physiological structures or pathological structures from the image. In some embodiments, the pixels of interest are pixel of a certain channel such as the highest contrast channel. For vascular images, the green channel is typically the highest contrast channel.

The impulse response of the main real Gabor filter kernel oriented at the angle $\theta = -\pi/2$ may be formulated as Equation 1

$$g(x,y) = \frac{1}{2\pi\sigma_x\sigma_y} \exp\left[ -\frac{1}{2}\left(\frac{x^2}{\sigma_x^2} + \frac{y^2}{\sigma_y^2}\right) \right] \cos(2\pi f_o x),$$

where $\sigma_x$ and $\sigma_y$ are the STD values in the x and y directions, respectively, and $f_o$ is the frequency of the modulating sinusoid.

The parameters $\sigma_x$, $\sigma_y$, and $f_o$, are derived by taking into account the size of the lines or curvilinear structures to be detected.

The term "Tau", as used herein, refers to a parameter of determining of the thickness of the line detector. Therefore, Tau influences the thickness/width of the main sinusoidal lobe at half-maximum amplitude. This parameter is related to $\sigma_x$ and $f_o$ as follows: The amplitude of the exponential (Gaussian) term in Equation 1 is reduced to one half of its maximum at x = Tau/2 and y = 0; therefore, $\sigma_x$ = Tau/(2√(2 ln 2) = Tau/2.35. The cosine term has a period of Tau; hence, $f_o$ = 1/Tau. The value of $\sigma_y$ is defined as $\sigma_y$ = El $\sigma_x$.

The term "El", as used herein, refers to a parameter that determines the elongation of the Gabor filter in the orientation direction, with respect to its thickness. The specification of the Gabor filter in terms of the parameters {Tau, El} facilitates easier design and analysis in relation to the size of the features to be detected than the use of the parameters {$\sigma_x$, $\sigma_y$, $f_o$}. The values of Tau and El could be varied to prepare a bank of filters at different scales for multiresolution filtering and analysis.

Typically, Tau and El are chosen such that the combination of all Gabor filters used in the multi-scale filtering process provides a substantial, preferably the maximal coverage of the frequency domain of the Fourier-transform of a vascular image to be analyzed.

Each Gabor filter having certain Tau and El values generates an individual Gabor filter response for each pixel. As such the filter response is indicative of the structures in the pixels of interest having a size, shape, and orientation matching those of the respective Gabor filter.

The weighting factor is determined based on the Tau- and/or El-dependent filter characteristic. In some embodiments, the Tau- and/or El-dependent filter characteristic described herein is a Tau-dependent filter characteristic or a Tau- and El-dependent filter characteristic. A single Gabor filter kernel for a given Tau, El and angle consists of a main lobe that is divided between two lobes of equal size and shape, but on opposite sides of the filter center (-ve and +ve frequencies). Certain filter characteristics such as size, shape, and radial distance (distance from the filter center (DC point)) are determined by Tau and El, and the angular location is given as an angle from the horizontal axis. By accounting for filter properties such as filter area, the Tau- and/or El-dependent filter characteristic allows to weigh the differing Tau/El specific Gabor responses and renders them combinable. Typically, larger values of Tau result in a Gabor filter having lobes that are further from the filter center (i.e. at higher frequencies), and thus the peak value of the filter (or mean frequency of a lobe) would be further from the filter center, resulting in a larger weight. In some embodiments, it may be desired to reduce (or boost) the response for certain angles (for instance the main vessels typically leave the optic nerve head region at a similar angle, and they are large vessels that tend to dominate the Gabor response). This could be done by including the filter angle in the weight computation. In the case of angle-based weighting, the weight would not be identical for all angles, and it would affect even single-scale Gabor filtering.

The inventors found that weighting a Gabor filter response based on its Tau- and/or El-dependent filter characteristic has a surprising effect on the output of the multi-scale Gabor magnitude response in reducing the level of noise while accentuating the response from real vascular pixels. Without being bound by theory, this weighting compensates for naturally weaker responses from filters with smaller areas that capture smaller vessels. Furthermore, this weighting processing is adaptive to the properties of the vessels and images and therefore makes the method robust, reduces the need of preprocessing steps and allows the method to be applicable to a broad range of images.

The inventors found that calculating the mean of the Gabor filter response of each pixel of interest of at least two (preferably of all) different Gabor filter angles is an efficient way generate a multi-scale Gabor filter response indicative of the spatial and/or geometric vessel properties. However, provided that the weighting is considered, any known method of combining and/or selecting the (weighted) Gabor filter magnitude of each pixel of interest of at least two different Gabor filter angles can be used to generate a Gabor filter response indicative of the spatial and/or geometric vessel properties.

The sets of pixels of interest to which the Gabor filters are applied may additionally undergo identical or differing processing steps such as scaling. The scale factor may be any suitable scale factor and can depend on be user input, can be data-base dependent, or can be chosen based on image properties such as image size, compression or recording camera. The scaling is typically lowered to reduce computer resource requirements and to reduce the risk of introducing additional artefacts.

The multi-scale Gabor filter is not necessarily limited to a first and a second Gabor filter response, but three or more Gabor filter responses may be combined.

Accordingly, the invention is at least in part based on the surprising finding that combining weighted Gabor responses as described herein improves detection and/or characterization of vessel properties in vascular images.

The Gabor filters described herein may be applied at any orientation and is typically applied at a plurality of different Gabor filter angles. The number of the plurality of different Gabor filter angles can influence the detection resolution. In some embodiments, the plurality of Gabor filter angles is at least 5, at least 10, at least 20 or at least 30 different angles. The number of the plurality of different Gabor filter angles can influence required resources. In some embodiments, the plurality of Gabor filter angles not more than 180, not more than 120 or not more than 90 different angles. Preferably, plurality of angles is between 5 and 180 different angles, between 10 and 120 different angles, between 20 and 120 different angles or between 30 and 90 different angles.

The inventors found that selecting the highest Gabor filter response of each pixel of interest of at least two (preferably of all) different Gabor filter angles is an efficient way generate a Gabor filter response. This selection basically has the effect of picking the most responsive orientation for the single-scale Gabor filter.

Tau and El can for example be chosen based on previously determined optimal values for a given image type, image set or a given application, or it can be determined based on the combination of equipment and processing methods that the vascular image to be analyzed underwent. Alternatively, the values could be set on an image-by-image basis using the vascular image property.

In certain embodiments, the invention relates to the method of the invention, wherein the method comprises a step of selecting Tau and EI based on a vascular image property.

The term "vascular image property", as used herein, is an image property of the vascular image that is known prior to applying a multi-scale Gabor filter to the pixels of interest as described herein. The skilled person may use any other method than the method for generation a to multi-scale Gabor filter response to obtain a vascular image property. For example, the vascular image property can be at least one selected from the group consisting of: image size, magnification level and estimated noise.

In certain embodiments, the invention relates to the method of the invention, wherein the method comprises a step of scaling the vascular image to obtain the pixels of interest of the vascular image.

By downscaling the vascular image to obtain the pixels of interest, required computer resources can be reduced. Furthermore, scaling in a set of images may normalize the size of all images.

In certain embodiments, the invention relates to the method of the invention, wherein the method comprises a step of removing artefacts in the vascular image to obtain the pixels of interest of the vascular image.

Pathology, the capturing process and/or image processing may induce artifacts, which can be removed by methods known in the art. This enhances the efficiency as well as the results of the method described herein.

In certain embodiments, the invention relates to the method of the invention, wherein the method comprises a step of scaling the vascular image and removing artefacts in the vascular image to obtain the pixels of interest of the vascular image.

Accordingly, the invention is at least in part based on the surprising finding that preprocessing vascular images as described herein improves detection and/or characterization of vessel properties in vascular images.

In certain embodiments, the invention relates to the method of the invention, wherein the method comprises a step of adjusting gamma values of the vascular image.

The adjustment may be applied to the vascular image or to the pixel of interest in the vascular image. In certain embodiments, the step of adjusting gamma values described herein comprises an adaptive gamma correction. An adaptive gamma correction can for example be achieved by generating an adaptive gamma map as: : $\gamma(x,y) = \gamma_b^{2B(x,y)-1}$, wherein $\gamma_b$ is a base gamma value, which may be chosen based on user input or determined data-base specific or dependent image properties.

The gamma correction described herein enhances contrast, which enhances the results of the subsequent method steps described herein.

In certain embodiments, the invention relates to the method of the invention, wherein the method comprises a step of a) adjusting gamma values of the vascular image; and b) applying noise filtering and/or unsharp masking.

Noise filtering can for example be achieved by low-pass filtering. Unsharp masking for example adaptive unsharp masking can be used to enhance edges.

Accordingly, the invention is at least in part based on the surprising finding that preprocessing vascular images as described herein improves detection and/or characterization of vessel properties in vascular images.

In certain embodiments, the invention relates to the method of the invention, wherein the Tau- and/or EI-dependent filter characteristic comprises or consists of a frequency at or close to center of the filter and a frequency at or around an extreme of the filter.

In certain embodiments, the invention relates to the method of the invention, wherein the Tau- and/or EI-dependent filter characteristic comprises or consists of mean frequency and/or peak frequency.

Weight computation for a given Tau and EI can for example be done using the Gabor filter for that Tau and EI at an angle of a certain degree, e.g., 0 degrees. First the distance from the center of the filter to the pixel having the highest magnitude is measured (i.e. peak frequency). This distance is then divided by the distance from the filter center to a corner to normalize the distance value (i.e. relative peak frequency). This value is then raised to the power of 0.25, which was arrived at by trial and error to give optimal results for the data described in example 7 but may be different for different data sets.

The Gabor filter for each angle is then multiplied by this weighting factor prior to being applied to the prepared image.

In certain embodiments, the invention relates to a computer-implemented method for segmenting vessels in a vascular image, the method comprising the steps of: a) generating a multi-scale Gabor filter response according to the method of the invention, b) segmenting a vessel in the vascular image by applying a segmentation algorithm.

The term "segmentation", as used herein, refers to dividing an image into different regions, and/or dividing an image into different regions an area in space depicted in one or more images (e.g., an image plane). The terms "segmentation algorithm" and "segmentation technique" are used herein interchangeably. In some embodiments, the segmentation technique is an instance segmentation technique. In some embodiments, the segmentation technique is a semantic segmentation technique. In some embodiments, the segmentation technique described herein is a technique selected from the group of thresholding, clustering methods, compression-based methods, histogram-based methods, edge detection, dual clustering method, region-growing methods, partial differential equation-based methods, variational methods, graph partitioning methods, Markov random fields, supervised image segmentation, gradient descent, simulated annealing, watershed transformation, model-based segmentation, multi-scale segmentation, one-dimensional hierarchical signal segmentation, semi-automatic segmentation, and trainable segmentation.

In certain embodiments, the invention relates to the method of the invention, wherein the segmentation algorithm comprises a thresholding algorithm.

The inventors found that a thresholding algorithm comprising the step of generating a local intensity variance map can improve the detection vessels in a preprocessed vascular image. In certain embodiments, the invention relates to a method for segmenting vessels comprising the steps of a) preprocessing a vascular image or retrieving a preprocessed image; and b) applying a threshold algorithm to obtain the segmented vessel(s) in the vascular image, wherein the local intensity variance map is determined by comparing the contrast between a smaller pixel intensity window and a lager pixel intensity window of a relevant pixel of the vascular image, wherein the pixel intensity windows are indicative of the brightness of an area surrounding the relevant pixel of the vascular image.

The preprocessing can be achieved by any method known in the art. The preprocessing is typically done to remove noise and/or accentuating the vessels in the image. In some embodiments, "preprocessing a vascular image" comprises applying an orientation sensitive filter such as a Gabor filter or a multi-scale Gabor filter.

The derivation of threshold map via local variance has a surprising effect in terms of the output of the binarization step severely reducing the amount of noise (false positive) pixels present in the final results.

Accordingly, the invention is at least in part based on the surprising finding that the thresholding method comprising a local intensity variance map as described herein improves detection and/or characterization of vessel properties in vascular images.

In certain embodiments, the invention relates to a computer-implemented method for segmenting vessels in a vascular image, the method comprising the steps of: a) generating a multi-scale Gabor filter response according to the method of the invention, b) segmenting a vessel in the vascular image by applying a segmentation algorithm, wherein the segmentation algorithm comprises a thresholding algorithm and wherein the thresholding algorithm comprises generating a local intensity variance map, wherein the local intensity variance map is determined by comparing the contrast between a smaller pixel intensity window and a lager pixel intensity window of a relevant pixel of the vascular image, wherein the pixel intensity windows are indicative of the brightness of an area surrounding the relevant pixel of the vascular image.

The combination of localized thresholding and the weighted multi-scale Gabor filter improve the detection to a level that is not achievable with the methods known in the art.

Furthermore, it is surprising to see the results of combination of the weighted-Gabor filters with the local intensity variance map in how it supressed the effects (artefacts) cause by the compression of the images (for example JPEG compression is known for reducing file sizes, while introducing artefacts, such as the JPEG compression artefact in the form of small 4-pixel wide blocks of the picture retaining identical values and thus leading to noise in small scales of analysis). The combination of the weighted-Gabor filters and the local-variance-threshold map had a surprising effect of enhancing the appearance of thin vessels while reducing general noise, major contributor of which, is the compression artefacts.

Accordingly, the invention is at least in part based on the surprising finding that the combination of the weighted Gabor filters with the local intensity variance map as described herein improves detection and/or characterization of vessel properties in vascular images.

In certain embodiments, the thresholding algorithm comprises generating a local intensity variance map and accentuating high-variance regions.

Accentuating high-variance regions can improve vessel segmentation in the context of known preprocessing steps and particularly improves vessel segmentation in the combination of a weighted multi-scale Gabor filter.

Accentuating high-variance regions can for example be achieved by isolating areas of high local variance on the local intensity variance map, smoothening isolated areas of high local variance (e.g. by applying a smoothing or blurring filter such as Gaussian, mean, median), accenting the high variance regions e.g. by thresholding and computing an accentuated local intensity variance map. Accentuating the high-variance region can facilitate vessel segmentation and suppress noise.

Accordingly, the invention is at least in part based on the surprising finding that an accentuated local intensity variance map as described herein improves detection and/or characterization of vessel properties in vascular images, in particular in combination with the weighted multi-scale Gabor filter method described herein.

In certain embodiments, the thresholding algorithm comprises generating a local intensity variance map and scaling the variance map with a computed base threshold (either global or locally adaptive). This allows adjust the threshold level.

In certain embodiments, the invention relates to a computer-implemented method for extracting features of vessels in a vascular image, the method comprising the steps of: a) retrieving and/or generating a multi-scale Gabor filter response according to the method of the invention, segmenting vessels in a vascular image according to the method the invention and/or retrieving vessel segments segmented according to the method the invention; and b) extracting features of the vessels in the vascular image by interpreting the Gabor filter response, the multi-scale Gabor filter response and/or the segments.

The "features of the vessels" described herein are features derived from the spatial and/or geometric vessel properties in a vascular image. As such they can for example be mathematical features (e.g. total vessel area), image quality related features (e.g. vessel contrast compared to global contrast), physiology-related related (e.g. vasodilatation or pulse), pathology-related related (e.g. vessel health, blood pressure or a vessel related diagnosis).

In certain embodiments, interpreting the Gabor filter response comprises a classification algorithm and/or a machine learning technique.

The methods described above (i.e. the method of the invention for generating a Gabor filter response; the method of the invention for generating a multi-scale Gabor filter, the method of the invention for segmenting vessels and/or method of the invention for extracting features of vessels in a vascular image) may each also be combined with modules described in Figures 1 to 14. For example, the 1.1.1.1 Brightness component module may be used in identifying the pixels of interest in the vascular image and/or in the contrast enhancement procedure before adjusting gamma values. Furthermore, the methods described above may also be used to improve classification of the quality of a vascular image in Figures 1 to 14. As such, the methods described above may be used to improve or replace the Vessel Detection Module 1.1.2.2. and the Multi-Scale Gabor Module 1.1.2.2.1 (e.g. Fig. 11 and 14).

In certain embodiments, the invention relates to a computer-implemented method for classification of the quality of a vascular image, the method comprising the steps of: a) determining an image quality pattern of a vascular image based on a Gabor filter response, a multi-scale Gabor filter response, a segmented vessel and/or an extracted feature; wherein the Gabor filter response is generated according to the method of the invention; the multi-scale Gabor filter response is generated according to the method of the invention, the segmented vessel is segmented according to the method of the invention and the extracted feature is extracted according to the method of the invention; b) comparing the image quality pattern obtained in (a) with a predefined image quality threshold pattern, wherein the quality threshold pattern comprises at least one threshold and/or a classification model comprising or consisting of a set of weights; and c). classifying the quality of the vascular image, wherein the image quality is classified based on the comparison of (b), in particular wherein the image quality is classified as having high quality if the image quality pattern is above the predefined image quality threshold pattern and wherein the image quality is classified as having low quality if the image quality pattern is below the predefined image quality threshold pattern.

In certain embodiments, the invention relates to a computer-implemented method for classification of the quality of a vascular image, the method comprising the steps of: a) determining an image quality pattern of a vascular image based on i) a Gabor filter response, a multi-scale Gabor filter response, a segmented vessel and/or an extracted feature; wherein the Gabor filter response is generated according to the method of the invention; the multi-scale Gabor filter response is generated according to the method of the invention and the segmented vessel is segmented according to the method of the invention and the extracted feature is extracted according to the method of the invention; and ii) at least one metric of the vascular image selected from the group consisting of: sharpness metric, a brightness metric, and a contrast metric, wherein the sharpness metric comprises determining in at least two areas in the vascular image a spatial orientation of edges and frequency variation, wherein frequency variation is the variation in at least a part of the frequency domain of the image, the brightness metric, wherein the brightness metric is indicative of brightness-derived quality parameters and comprises determining non-uniformity of the brightness of the image, and the contrast metric comprises determining a global contrast; b) comparing the image quality pattern obtained in (a) with a predefined image quality threshold pattern, wherein the quality threshold pattern comprises at least one threshold and/or a classification model comprising or consisting of a set of weights; and c). classifying the quality of the vascular image, wherein the image quality is classified based on the comparison of (b), in particular wherein the image quality is classified as having high quality if the image quality pattern is above the predefined image quality threshold pattern and wherein the image quality is classified as having low quality if the image quality pattern is below the predefined image quality threshold pattern.

In certain embodiments, the invention relates to a computer-implemented method for classification of the quality of a vascular image, the method comprising the steps of: a. determining an image quality pattern of a vascular image based on a sharpness metric, a brightness metric, and a contrast metric of the vascular image, wherein the sharpness metric comprises determining in at least two areas in the vascular image a spatial orientation of edges and frequency variation, wherein frequency variation is the variation in at least a part of the frequency domain of the image, the brightness metric, wherein the brightness metric is indicative of brightness-derived quality parameters and comprises determining non-uniformity of the brightness of the image, and the contrast metric comprises determining a global contrast and determining the contrast of at least one vessel segment; b. comparing the image quality pattern obtained in (a) with a predefined image quality threshold pattern, wherein the quality threshold pattern comprises at least one threshold and/or a classification model comprising or consisting of a set of weights; and c. classifying the quality of the vascular image,

13

wherein the image quality is classified based on the comparison of (b), in particular wherein the image quality is classified as having high quality if the image quality pattern is above the predefined image quality threshold pattern and wherein the image quality is classified as having low quality if the image quality pattern is below the predefined image quality threshold pattern.

The term "image quality pattern", refers to a pattern indicative of the image quality of the vascular image. A "pattern", as used herein refers to at least one selected from the group of score, metric, value, category, vector, matrix and classification. In some embodiments, the image quality pattern comprises at least one measure indicative of quality of sharpness, brightness, and contrast. In some embodiments, the image quality pattern comprises at least one measure indicative for quality of sharpness, brightness, contrast, and overall image quality. In some embodiments, the image quality pattern described herein is a trained linear discriminant classifier that via training, determines certain boundaries that will separate the quality of images into classes.

The terms "sharpness metric", "contrast metric" and "brightness metric" refer to metrics that are determined based on the sharpness, contrast, and brightness of the image.

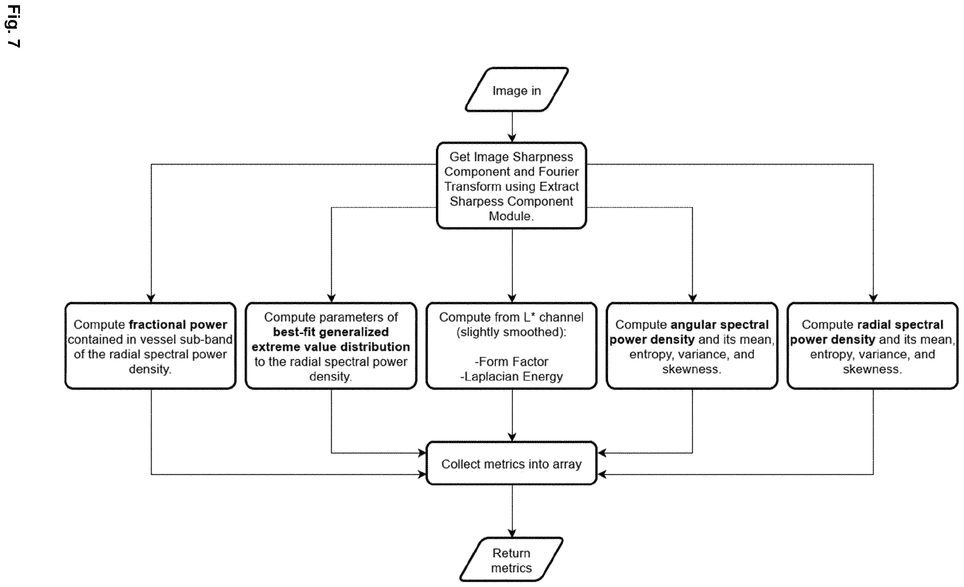

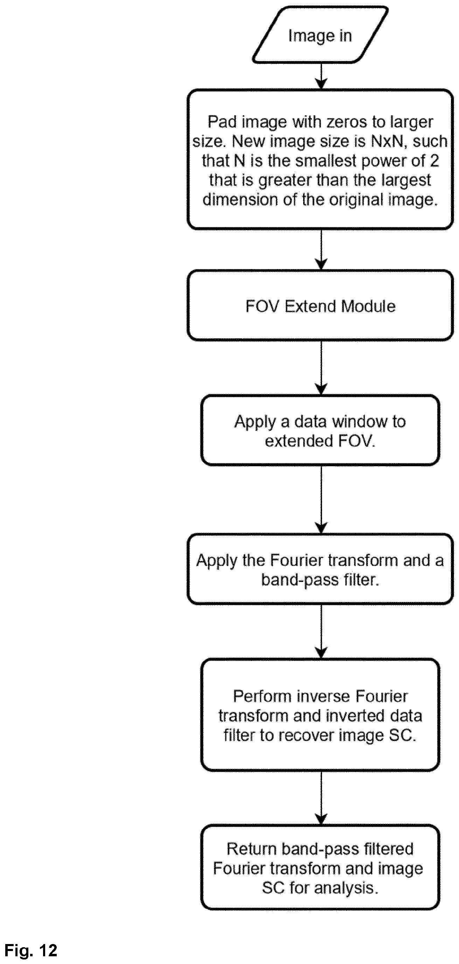

The term "sharpness", as used herein, refers to the clarity of the image in terms of both focus and edge contrast. When the subject of an image is sharp the image appears clear, with detail, edge contrast and texture rendered in high detail. In some embodiments, the sharpness described herein is determined or partially determined as described by the 1.1.3. Sharpness Assessment module (see, e.g., Fig. 7). In some embodiments, the sharpness described herein is determined or partially determined as described by the 1.1.3. Sharpness Assessment module (see, e.g., Fig. 7) and the 1.1.3.1. Extract Sharpness Component Module (see, e.g., Fig. 12). In some embodiments, the sharpness metric described herein is computed based on at least 1, at least 2, at least 3, at least 4, at least 5, or all metrics selected from the group consisting of: Form Factor; Laplacian Energy; Histogram metric, Angular Power Spectral Density metric, Radial Power Spectral Density metric and Generalized Extreme Value Distribution metric. In some embodiments, the sharpness metric described herein is determined based on at least 1, at least 2, at least 3, at least 4, at least 5, at least 6, at least 7, at least 8, at least 9, at least 10, at least 11, at least 12, at least 13, at least 14, at least 15, at least 16, at least 17, at least 18, at least 19, at least 20, or all metrics selected from the group consisting of: Form Factor, Laplacian Energy, Histogram Mean, Histogram Standard Deviation, Histogram Coefficient of Variation, Histogram Skewness, Histogram Kurtosis, Angular Power Spectral Density Mean, Angular Power Spectral Density Entropy, Angular Power Spectral Density Variance, Angular Power Spectral Density Skewness, Radial Power Spectral Density Mean, Radial Power Spectral Density Median, Radial Power Spectral Density Entropy, Radial Power Spectral Density Variance, Radial Power Spectral Density Skewness, Radial Power Spectral Density Kurtosis, Radial Power Spectral Density Fractional Power, Generalized Extreme Value Distribution Mu, Generalized Extreme Value Distribution Sigma and Generalized Extreme Value Distribution Xi.

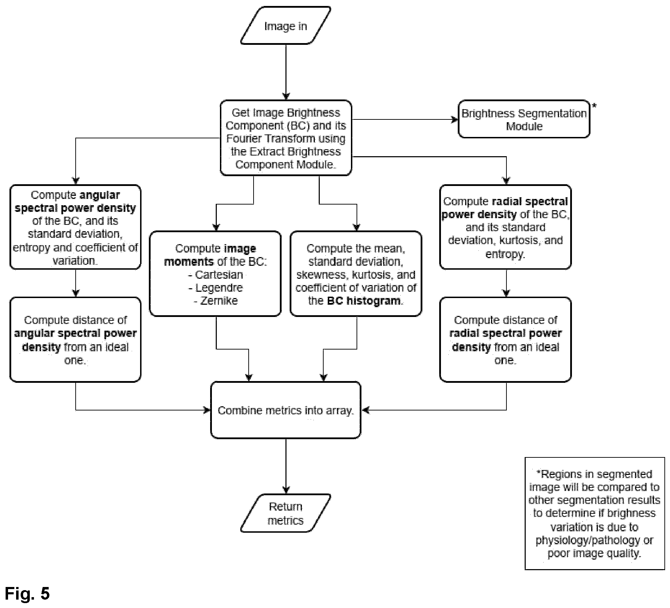

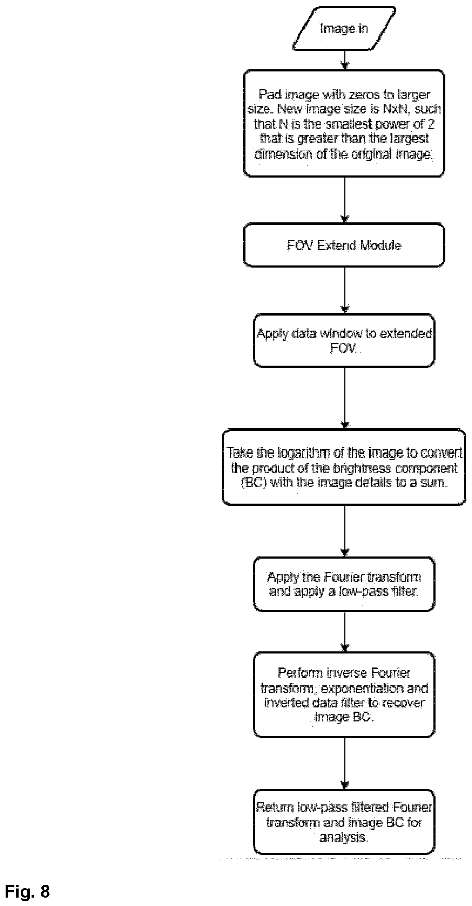

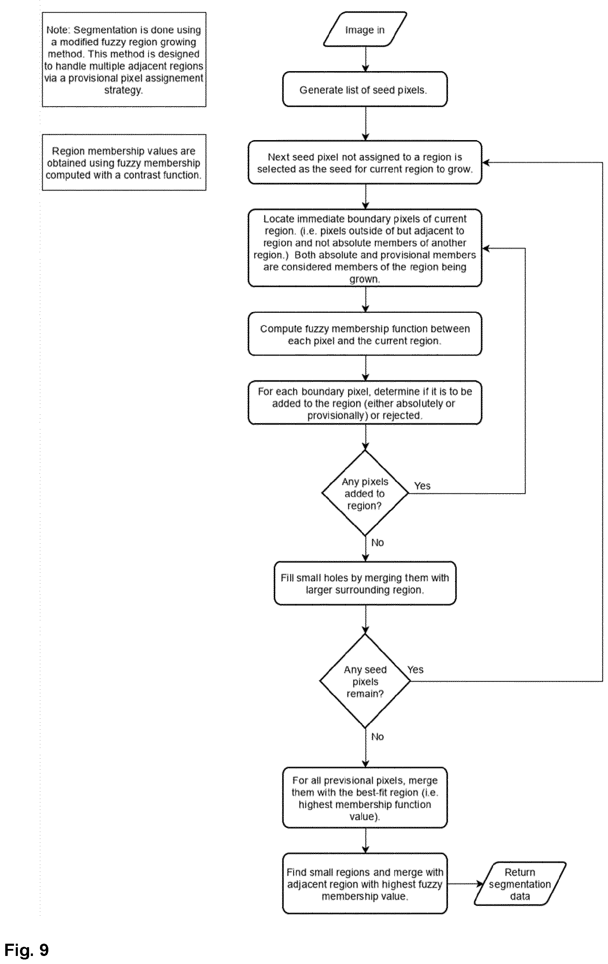

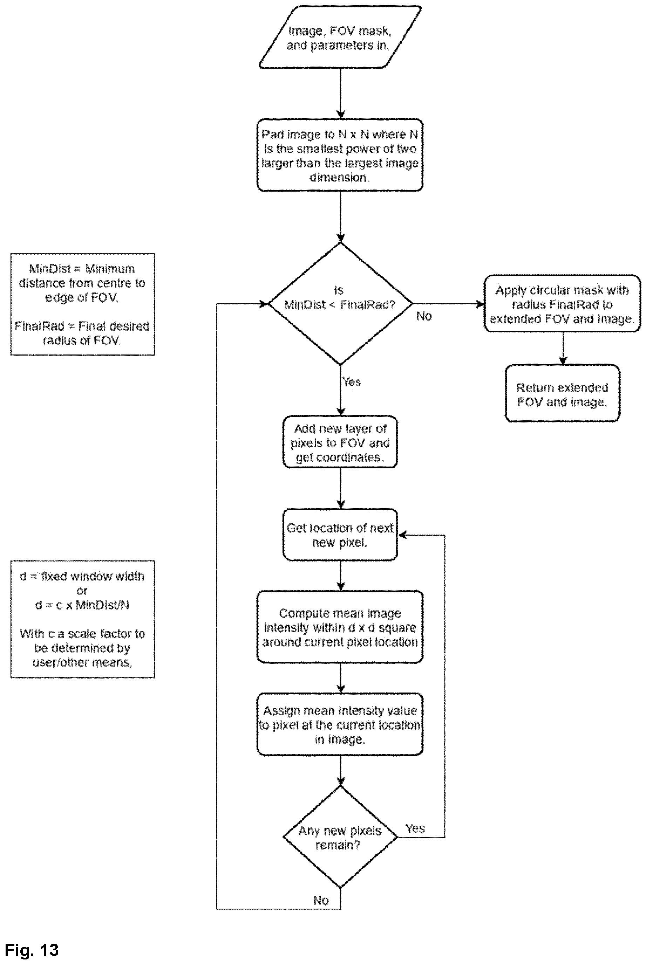

The term "brightness", as used herein, refers to the attribute of a pixel that appears to emit more or less light upon visual perception. In some embodiments, the brightness described herein is the arithmetic mean of the red, green, and blue color coordinates. In some embodiments, the brightness described herein is a color coordinate in HSL color space. "brightness" and "luminance" are used herein interchangeably. In some embodiments, the brightness described herein is determined or partially determined as described by the 1.1.1. Brightness Assessment (see, e.g., Fig. 5). In some embodiments, the brightness described herein is determined or partially determined as described by the 1.1.1. Brightness Assessment (see, e.g., Fig. 5) and the 1.1.1.1. Extract Brightness Component Module (see, e.g., Fig. 8). In some embodiments, the brightness described herein is determined or partially determined as described by the 1.1.1. Brightness Assessment (see, e.g., Fig. 5) and 1.1.1.2. Brightness Segmentation Module - Region Growing (see, e.g., Fig. 9). In some embodiments, the brightness described herein is determined or partially determined as described by the 1.1.1. Brightness Assessment (see, e.g., Fig. 5) and the 1.1.1.1. Extract Brightness Component Module (see, e.g., Fig. 8) and the 1.1.1.2. Brightness Segmentation Module - Region Growing (see, e.g., Fig. 9). In some embodiments, the brightness described herein is determined or partially determined as described by the 1.1.1. Brightness Assessment (see, e.g., Fig. 5) and the 1.1.1.1. Extract Brightness Component Module (see, e.g., Fig. 8) and the 1.1.1.2. Brightness Segmentation Module - Region Growing (see, e.g., Fig. 9) and the 1.1.1.1.1. FOV Extend Module (see, e.g., Fig. 13). In some embodiments, determination of the brightness metric comprises homomorphic filtering, preferably homomorphic filter wherein the lower-frequency components are extracted or higher weighted for further processing. This enables assessing brightness non-uniformity. In some embodiments, the brightness metric is determined from at least 50%, at least 60%, at least 70%, at least 80%, at least 90% or at least 95% of the pixels of the image or of the field of view mask. In some embodiments, the brightness metric described herein is computed based on at least 1, at least 2, at least 3, at least 4, at least 5, at least 6, at least 7, at least 8, at least 9, at least 10, or all metrics selected from the group consisting of: Histogram metric, Laplacian Energy, Root Mean Squared Distance From Mean, Cartesian Moment, Legendre Moment, Real Zernike Moment, Imaginary Zernike Moment, Angular Power Variation, Radon Transform Power Variation, Angular Power Spectral Density Entropy and Radial Power Spectral Density Entropy. In some embodiments the brightness metric is indicative of the brightness-related content of at least 50%, at least 60%, at least 70%, at least 80%, at least 90% or at least 95% the pixels in an vascular image or in the field of view mask thereof.

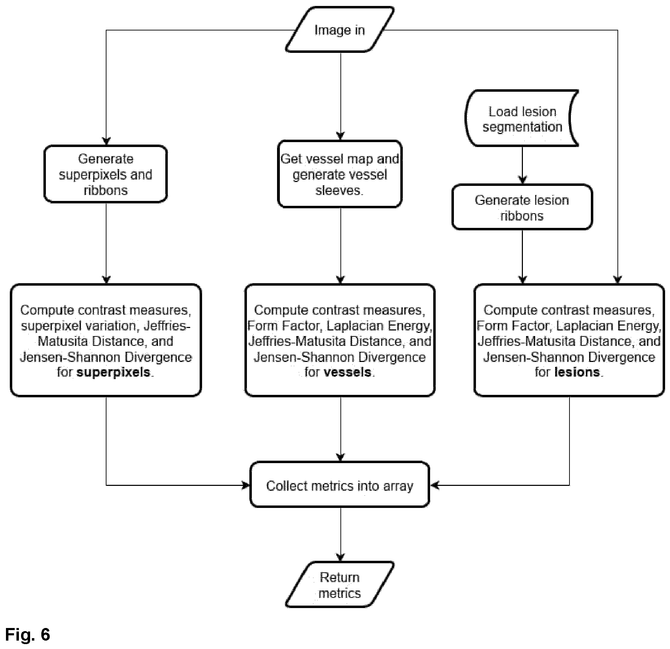

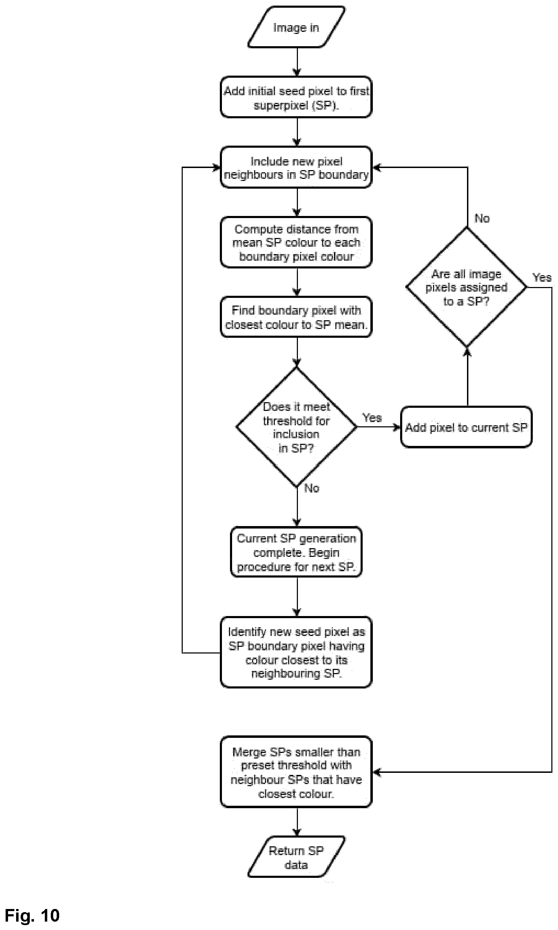

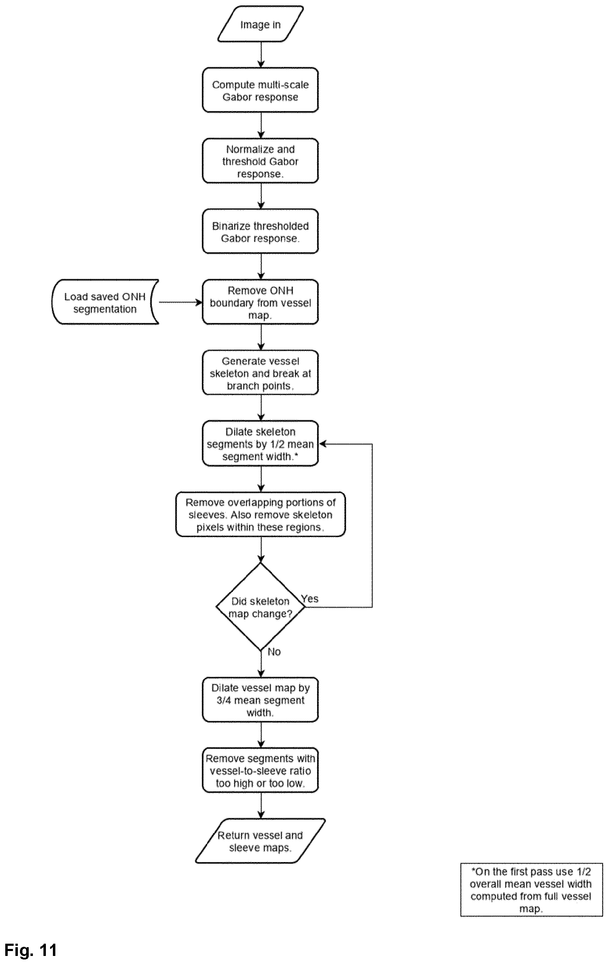

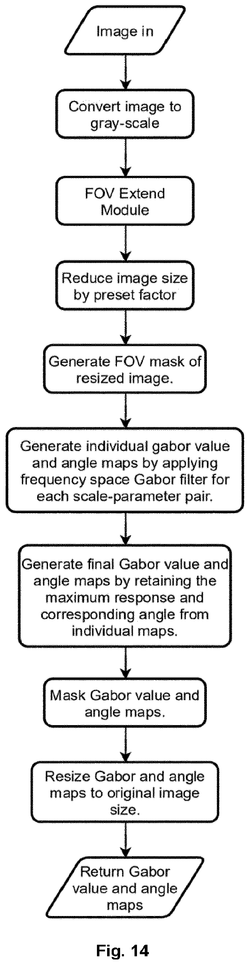

The term "contrast", as used herein, refers to the difference in luminance and/or color that makes a representation of an object on an image distinguishable. In some embodiments, the contrast described herein is calculated according to Weber contrast. In some embodiments, the contrast described herein is calculated according to Michelson contrast. In some embodiments, the contrast described herein is calculated according to RMS contrast. In some embodiments, the contrast is determined or partially determined as described by the 1.1.2. Contrast Assessment (see, e.g., Fig. 6). In some embodiments, the contrast is determined or partially determined as described by the 1.1.2. Contrast Assessment (see, e.g., Fig. 6) and the 1.1.2.1. Super-pixel Module (see, e.g., Fig. 10). In some embodiments, the contrast is determined or partially determined as described by the 1.1.2. Contrast Assessment (see, e.g., Fig. 6) and the 1.1.2.2. Vessel Detection Module (see, e.g., Fig. 11). In some embodiments, the contrast is determined or partially determined as described by the 1.1.2. Contrast Assessment (see, e.g., Fig. 6) and the 1.1.2.1. Super-pixel Module (see, e.g., Fig. 10) and the 1.1.2.2. Vessel Detection Module (see, e.g., Fig. 11). In some embodiments, the contrast is determined or partially determined as described by the 1.1.2. Contrast Assessment (see, e.g., Fig. 6) and the 1.1.2.1. Super-pixel Module (see, e.g., Fig. 10) and the 1.1.2.2. Vessel Detection Module (see, e.g., Fig. 11) and the 1.1.2.2.1. Multi-Scale Gabor Module (see, e.g., Fig. 14). In some embodiments, the global contrast is determined from at least 50%, at least 60%, at least 70%, at least 80%, at least 90% or at least 95% of the pixels of the image or of the field of view mask.

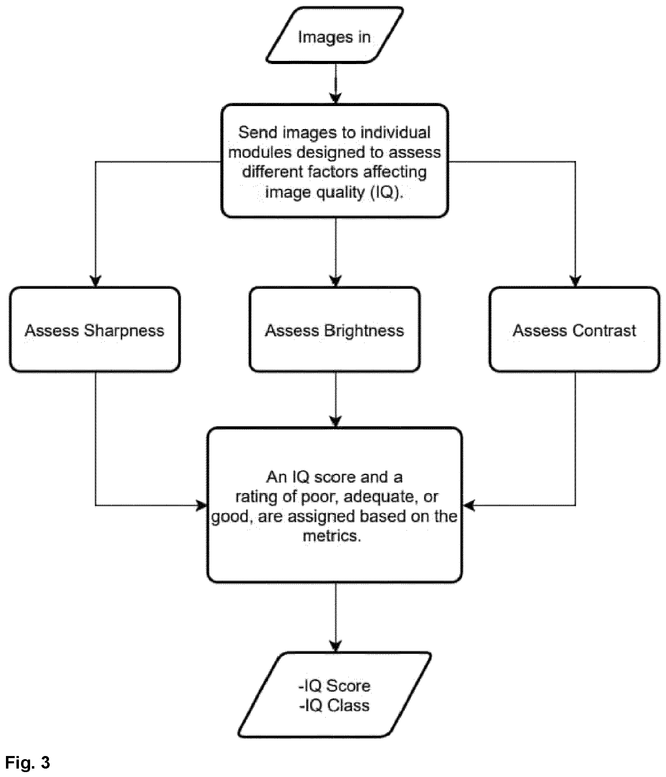

The term "predefined image quality threshold pattern", as us herein, refers to a predefined pattern comprising at least one threshold to determine the sufficiency of image quality. In some embodiments, the predefined image quality threshold pattern comprises more than one threshold. In some embodiments, the predefined image quality threshold pattern comprises at least one threshold for indicative for quality of at least one measure selected from the group of sharpness, brightness and contrast. In some embodiments, the predefined image quality threshold pattern comprises at least one threshold for indicative for quality of at least one measure selected from the group of sharpness, brightness, contrast, and overall image quality (see e.g., Fig. 3).

In some embodiments, the predefined image quality threshold pattern comprises values that can be amended to obtain images and/or classes of images of a certain quality by the methods described herein. In some embodiments, the predefined image quality threshold pattern comprises a threshold to obtain an image and/or at least one class of images by the methods described herein to have sufficient quality for grading and/or diagnosis of at least one indication selected from the group consisting of stroke, subclinical brain lesion, white matter lesion, dementia, hypertension, diabetes, cardiovascular diseases (e.g., coronary heart disease and cerebral vascular disease), glaucoma, prematurity, papilloedema, and common retina disease (e.g., macular hole, age-related macular degeneration).

In some embodiments, the threshold for high quality for the diagnosis of at least one indication described herein is determined by estimation of the threshold value. In some embodiments, a machine learning technique is used to predefine the image quality threshold pattern described herein. The term "machine-learning technique", as used herein, refers to a computer-implemented technique that enables automatic learning and/or improvement from an experience (e.g., training data and/or obtained data) without the necessity of explicit programming of the lesson learned and/or improved. In some embodiments, the machine learning technique comprises at least one technique selected from the group of Logistic regression, CART, Bagging, Random Forest, Gradient Boosting, Linear Discriminant Analysis, Gaussian Process Classifier, Gaussian NB, Linear, Lasso, Ridge, ElasticNet, partial least squares, KNN, DecisionTree, SVR, AdaBoost, GradientBoost, neural net and ExtraTrees. In some embodiments, a supervised machine learning technique is used to predefine the image quality threshold pattern described herein. In some embodiments, the supervised machine learning technique described herein is trained and/or validated using data labeled by at least one person qualified to diagnose the relevant indication (e.g., retinal images labeled by at least one ophthalmologist for sufficient/insufficient quality to diagnose e retinal disease). In some embodiments, the threshold for sufficient quality for the diagnosis of at least one indication described herein is the threshold above which images are considered gradable for the characteristics of the indication.

The term "brightness reference image", as used herein, refers to an image that enables the normalization of brightness between images. In some embodiments, the brightness reference image described herein is an image with uniform brightness. In some embodiments, the brightness reference image described herein is an image with ideal image (i.e. an all-white image).

The term "global contrast", as us herein, refers to the overall contrast between larger areas of the vascular image. In some embodiments, the global contrast described herein is the contrast of larger areas within a field of view mask area. In some embodiments, the global contrast is determined by applying a super pixel method. In some embodiments the global contrast is indicative of the contrast related content of at least 50%, at least 60%, at least 70%, at least 80%, at least 90% or at least 95% of the pixels in a vascular image or in the field of view mask thereof.

The term "vessel segment", as used herein, refers to an area that represents at least one vessel. In some embodiments, the vessel referred to herein is at least one vessel selected from the group of blood vessels, arteries, arterioles, capillaries, venules, sinusoids, and lymphatic vessels. Vessel segmentation can be achieved by any method known in the art (see, e.g., Moccia, S., et al., 2018, Computer methods and programs in biomedicine, 158, 71-91; Dehkordi, et al., 2011, Journal of medical signals and sensors, 1(1), 49; Kirbas, C., & Quek, F., 2004, ACM Computing Surveys (CSUR), 36(2), 81-121.). In some embodiments, the vessels are segmented using at least one method described in 1.1.2.2. Vessel Detection Module (see, e.g., Fig. 11). In some embodiments, the vessel is labeled (e.g., by a radioactive label or a fluorescent label) and/or highlighted (e.g., by a contrast agent). Large vessels comprise more image quality-related and contrast-related information than small vessels. In some embodiments, the vessel detection module aims for detection of larger vessels compared to smaller vessels.

The local spatial orientation and frequency variation comprise relevant information about distinguishable elements on the vascular image and are therefore reflecting sharpness-related image quality metric particularly well.

The comparison to the reference brightness image normalizes brightness or aspects of brightness between the vascular images to be classified. This process enables a standardized comparison of the brightness metric between the images.

Global contrast of the vascular image is a central metric for image quality. For example, low contrast on vascular images can reduce the distinguishability of elements that are relevant for image grading and diagnosing.

The vessels on the vascular image comprise significant biological and diagnostic information. The vessel-related contrast can be different than the global contrast. Therefore, the properties and/or the image quality of the vessel segment is particularly relevant for subsequent grading and/or diagnosing. In some embodiments, at least one property of the vessel segment(s) influence(s) the image quality score. In some embodiments, the property of the vessel segment(s) is at least one property selected from the group of form, size, vessel density, length, and tortuosity. Abnormal vessels may serve as an indicator for a pathology and therefore facilitate gradeability. Reduced contrast of the vessels may therefore particularly influence the image quality score.

In some embodiments, the methods described herein classify the quality of a vascular image in additional categories. For example, such additional categories may comprise very poor quality, adequate quality, very good quality. In some embodiments, the additional categories determine whether an image is further processed or excluded. In some embodiments, the additional categories determine whether or not an image should be preferred over an equivalent image (e.g., of the same patient).

In some embodiments, the methods described herein classify the quality of a vascular image in real-time. In some embodiments, the methods described herein give the photographer recommendations for correcting technical errors in the acquisition of the photograph based on the classification of the image.

The threshold patterns employed in the invention (e.g., predefined image quality threshold pattern, enhanceability threshold pattern, segment reference pattern) enable efficient and standardization assessment. The means and methods of the present invention can minimize subjectivity and bias compared to existing methods and/or algorithms.

The combined determination of local spatial orientation and frequency variation, variation in brightness, global contrast and vessel contrast gives a comprehensive indication of image quality and enables high classification accuracy (Example 1). Furthermore, the method described herein does not require one specific objective measure for any image-quality feature, but determines the overall image quality. Furthermore, the determination is independent of the image orientation and can be independent of the location of anatomical entities that are used by methods known in the art for orientation, such as the optical nerve head.

Accordingly, the invention is at least in part based on the discovery, that quality classification of quality of a vascular image is particularly standardized and accurate by the combined determination of local spatial orientation and frequency variation, variation in brightness, global contrast and vessel contrast.

In some embodiments, the quality threshold pattern comprises enables classification in three or more categories. These three categories may comprise for example "good quality", "bad quality" and "low quality", wherein the "low quality" is indicative of further processing (such as further quality determination and/or quality enhancement) and wherein "bad quality" is not considered for further processing. In some embodiments, one of the categories is indicative of sub ideal quality, wherein sub ideal quality is indicative of acceptable but potentially enhanceable quality.

In certain embodiments, the invention relates to a computer-implemented method for classification of the quality of a vascular image, the method comprising the steps of: a. determining an image quality pattern of a vascular image based on a sharpness metric, a brightness metric, and a contrast metric of the vascular image, wherein the sharpness metric comprises determining of a spatial orientation and frequency variation of at least two areas in the vascular image, the brightness metric comprises comparing brightness values of the vascular image to a brightness reference image, and the contrast metric comprises determining a global contrast and determining the contrast of at least one vessel segment; b. comparing the image quality pattern obtained in (a) with a predefined image quality threshold pattern; and c. classifying the quality of the vascular image, wherein the image quality is classified based on the comparison of (b), in particular wherein the image quality is classified as having high quality if the image quality pattern is above the predefined image quality threshold pattern and wherein the image quality is classified as having low quality if the image quality pattern is below the predefined image quality threshold pattern.

In certain embodiments, the invention relates to a computer-implemented method for correction of the quality of a vascular image, the method comprising the steps of: i. retrieving a vascular image classified as having low quality according to the method of the invention; ii. retrieving or determining a Gabor filter response, a multi-scale Gabor filter response, a segmented vessel and/or an extracted feature; wherein the Gabor filter response is generated according to the method of the invention; the multi-scale Gabor filter response is generated according to the method of the invention and the segmented vessel is segmented according to the method the invention and the extracted feature is extracted according to the method of the invention; iii. comparing the Gabor filter response, the multi-scale Gabor filter response, the segmented vessels and/or the extracted feature to an enhancement threshold pattern; iv. correcting the quality of the vascular image by employing, at least one technique selected from the group of sharpness correction, brightness correction, and contrast correction; wherein the selection of the technique is based on the comparison in step ii).

In certain embodiments, the invention relates to a computer-implemented method for correction of the quality of a vascular image, the method comprising the steps of: i. retrieving a vascular image classified as having low quality according to the method of the invention; ii. retrieving or determining I) a Gabor filter response, a multi-scale Gabor filter response, a segmented vessel and/or an extracted feature; wherein the Gabor filter response is generated according to the method of the invention, the multi-scale Gabor filter response is generated according to the method of the invention, the segmented vessel is segmented according to the method the invention and the extracted feature is extracted according to the method of the invention; and II) a sharpness metric, a brightness metric, and/or a contrast metric of the vascular image, wherein the sharpness metric comprises determining of a spatial orientation and frequency variation of at least two areas in the vascular image, the brightness metric comprises comparing brightness values of the vascular image to a brightness reference image, and the contrast metric comprises determining a global contrast; iii. comparing the I) the Gabor filter response, the multi-scale Gabor filter response, the segmented vessels and/or the extracted feature and II) the sharpness metric, the brightness metric, and/or the contrast metric to an enhancement threshold pattern; iv. correcting the quality of the vascular image by employing, at least one technique selected from the group of sharpness correction, brightness correction, and contrast correction; wherein the selection of the technique is based on the comparison in step ii).

In certain embodiments, the invention relates to a computer-implemented method for correction of the quality of a vascular image, the method comprising the steps of: i. retrieving a vascular image classified as having low quality according to the method of the invention; ii. retrieving or determining a sharpness metric, a brightness metric, and a contrast metric of the vascular image, wherein the sharpness metric comprises determining of a spatial orientation and frequency variation of at least two areas in the vascular image, the brightness metric comprises comparing brightness values of the vascular image to a brightness reference image, and the contrast metric comprises determining a global contrast and determining the contrast of at least one vessel segment; iii. comparing the sharpness metric, the brightness metric, and/or the contrast metric to an enhancement threshold pattern; iv. correcting the quality of the vascular image by employing, at least one technique selected from the group of sharpness correction, brightness correction, and contrast correction; wherein the selection of the technique is based on the comparison in step ii).

In certain embodiments, the invention relates to a computer-implemented method for correction of the quality of a vascular image, the method comprising the steps of: i. retrieving a vascular image classified as having low quality according to the method of the invention; ii. comparing the sharpness metric, the brightness metric, and/or the contrast metric to an enhancement threshold pattern; iii. correcting the quality of a vascular image by employing, at least one technique selected from the group of sharpness correction, brightness correction, and contrast correction; wherein the selection of the technique is based on the comparison in step ii).

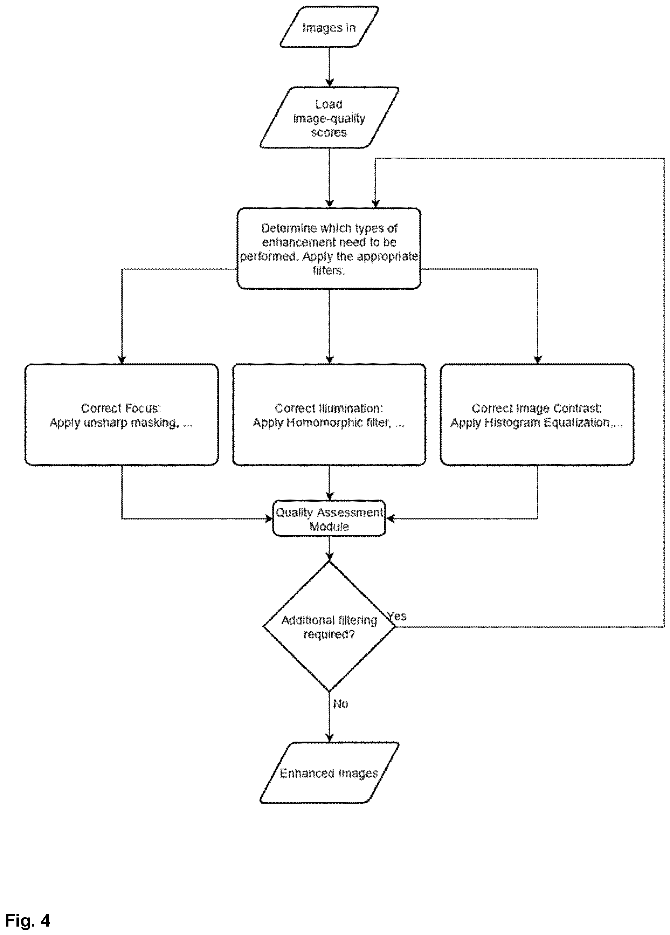

The term "correcting", as used herein, refers to altering at least one metric of an image, wherein the metric has been determined to indicate low quality, by a least one correction method selected from the group of sharpness correction, brightness correction and contrast correction (see e.g., Fig. 4). In some embodiments, the correction described herein comprises at least one technique selected from spatial domain method, point processing operation, and histogram processing. In some embodiments, the "low" quality described herein is "insufficient" quality and/or the "high" quality described herein is "sufficient" quality.

The term "sharpness correction", as used herein, refers to a method that alters sharpness. In some embodiments, the sharpness correction described herein comprises at least one technique selected from unsharp masking, frequency domain high emphasis and adaptive bilateral filtering.

The term "brightness correction", as used herein, refers to a method that alters brightness. In some embodiments, the brightness correction described herein comprises at least one technique selected from homomorphic filters, gamma correction and framelet regularization

The term "contrast correction", as used herein, refers to a method that alters contrast. In some embodiments, the contrast correction described herein comprises at least one technique selected from the group of histogram equalization and fuzzy-contextual contrast enhancement.

The term "enhancement threshold pattern", as used herein, refers to a pattern comprising at least one threshold to determine which correction technique should be applied. In some embodiments, the enhancement threshold pattern described herein comprises at least one threshold for the sharpness metric, at least one threshold for the brightness metric, and at least one threshold for the contrast metric.

The selection of the technique depends on the comparison of the sharpness metric, the brightness metric, and/or the contrast metric to the enhancement threshold pattern in that a technique is selected to be applied if the metric of the vascular image is above or below the threshold. In some embodiments, more than one threshold and/or one or more ranges for a metric of the enhancement threshold pattern determine which correction technique is used.

Therefore, the methods of the invention not only enable classification of vascular images and obtainment of vascular images but also enable enhancement of vascular images having low quality to vascular images having high quality e.g. for uses such as grading, diagnosing of diseases and/or further processing.

In some embodiments, the methods described herein classify the quality of a vascular image in real-time. In some embodiments, the methods described herein give the photographer recommendations for correcting technical errors in the acquisition of the photograph based on the classification and/or the correction of the image.

Accordingly, the invention is at least in part based on the discovery, that the correction as described herein can enhance vascular images of low quality according to the classification method of the invention.

In certain embodiments, the invention relates to a computer-implemented method for classification of quality enhanceability of a vascular image, the method comprising the steps of: i. retrieving a vascular image that is corrected according to the method of the invention; ii. determining a corrected image quality pattern of the corrected vascular image based on a Gabor filter response, a multi-scale Gabor filter response, a segmented vessel and/or an extracted feature; wherein the Gabor filter response is generated according to the method of the invention; the multi-scale Gabor filter response is generated according to the method of the invention and the segmented vessel is segmented according to the method the invention and the extracted feature is extracted according to the method of the invention; iii. comparing the difference between the corrected image quality pattern and the image quality pattern to an enhanceability threshold pattern; and iv. classifying quality enhanceability of the vascular image, wherein the vascular image is classified based on the comparison of step (iii), in particular wherein the vascular image is classified as enhanceable if the difference in step (iii) is above the enhanceability threshold pattern and wherein the vascular image is classified as not enhanceable if the difference in step (iii) is below the enhanceability threshold pattern.

In certain embodiments, the invention relates to a computer-implemented method for classification of quality enhanceability of a vascular image, the method comprising the steps of: i. retrieving a vascular image that is corrected according to the method of the invention; ii. determining a corrected image quality pattern of the corrected vascular image based on I) a Gabor filter response, a multi-scale Gabor filter response, a segmented vessel and/or an extracted feature; wherein the Gabor filter response is generated according to the method of the invention; the multi-scale Gabor filter response is generated according to the method of the invention and the segmented vessel is segmented according to the method the invention and the extracted feature is extracted according to the method of the invention; and II) a sharpness metric, a brightness metric, and/or a contrast metric of the corrected vascular image, wherein the sharpness metric comprises determining a spatial orientation and frequency variation of at least two areas in the vascular image, the brightness metric comprises comparing the brightness values of the corrected vascular image to a brightness reference image; and the contrast metric comprises determining global contrast; iii. comparing the difference between the corrected image quality pattern and the image quality pattern to an enhanceability threshold pattern; and iv. classifying quality enhanceability of the vascular image, wherein the vascular image is classified based on the comparison of step (iii), in particular wherein the vascular image is classified as enhanceable if the difference in step (iii) is above the enhanceability threshold pattern and wherein the vascular image is classified as not enhanceable if the difference in step (iii) is below the enhanceability threshold pattern.

In certain embodiments, the invention relates to a computer-implemented method for classification of quality enhanceability of a vascular image, the method comprising the steps of: i. retrieving a vascular image that is corrected according to the method of the invention; ii. determining a corrected image quality pattern of the corrected vascular image based on a sharpness metric, a brightness metric, and a contrast metric of the corrected vascular image; wherein the sharpness metric comprises determining a spatial orientation and frequency variation of at least two areas in the vascular image, the brightness metric comprises comparing the brightness values of the corrected vascular image to a brightness reference image; and the contrast metric comprises determining global contrast and determining the contrast of at least one vessel segment; iii. comparing the difference between the corrected image quality pattern and the image quality pattern to an enhanceability threshold pattern; and iv. classifying quality enhanceability of a vascular image, wherein the vascular image is classified based on the comparison of (iii), in particular wherein the vascular image is classified as enhanceable if the difference in step iii) is above the enhanceability threshold pattern and wherein the vascular image is classified as not enhanceable if the difference in step iii) is below the enhanceability threshold pattern.

The term "enhanceability threshold pattern", as used herein, refers to a pattern that allows distinguishing between 1.) enhanced images, and 2.) not enhanced or not substantially enhanced images. In some embodiments, the enhanceability threshold pattern can be chosen according to dataset size, available time and/or computer resources. In some embodiments, the enhanceability threshold pattern represents a threshold of about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, about 20%, about 21%, about 22%, about 23%, about 24%, or about 25% of a threshold of the image quality pattern. In some embodiments, a machine learning technique is used to generate the enhanceability threshold pattern described herein. In some embodiments, a supervised machine learning technique is used to generate the enhanceability threshold pattern described herein.

The comparison of the difference between the corrected image quality pattern and the image quality pattern indicates the enhancement achieved by the correction. Therefore, an image is classified as not enhanceable, if no enhancement or unsubstantial enhancement is achieved.

Accordingly, the invention is at least in part based on the discovery, that the enhancability of vascular images of low quality according to the classification method of the invention can be determined.

In certain embodiments, the invention relates to a computer-implemented method for classification of the quality of a vascular image, the method comprising the steps of: I. classifying the quality of a vascular image according to the method of the invention; II. correcting the quality of the vascular image according to the method of the invention; III. classifying the quality of the corrected vascular image according to the method of the invention; and IV. classifying the vascular image as having good quality if the vascular image and/or the corrected vascular image are/is classified as having high quality.

In certain embodiments, the invention relates to a computer-implemented method for classification of the quality of a vascular image, the method comprising the steps of: I. classifying the quality of a vascular image according to the method of the invention; II. correcting the quality of the vascular image according to the method of the invention, if the vascular image is classified as having low quality according to step I.; III. classifying the quality of the corrected vascular image according to the method of the invention, if the vascular image is classified as having low quality according to step I.; and IV. classifying the vascular image as having good quality if the vascular image and/or the corrected vascular image are/is classified as having high quality.

In some embodiments, the methods described herein enable the identification and classification of images as having high quality (i.e. corrected images with good or adequate quality) that are considered to have low quality according to other methods.

Therefore, the means and methods described herein enable the classification of vascular images that not only considers their original quality but also identifies pictures that can be enhanced.

Accordingly, the invention is at least in part based on the surprising finding that the methods for classification according to the invention enable an improved classification that identifies more images of sufficient quality in a standardized manner.

In certain embodiments, the invention relates to a computer-implemented method for classification of the quality of a vascular image, the method comprising the steps of: I. classifying the quality of a vascular image according to the method of the invention; II. correcting the quality of the vascular image according to the method of the invention, if the vascular image is classified as having low quality according to step I.; III. classifying the quality of the corrected vascular image according to the method of the invention, if the vascular image is classified as having low quality according to step I.; and IV. classifying the vascular image as having good quality if the vascular image and/or the corrected vascular image are/is classified as having high quality.

In certain embodiments, the invention relates to the computer-implemented method of the invention, the method comprising the steps of: 1) classifying quality enhanceability of the corrected vascular image according to the method of the invention, if the vascular image classified as having low quality according to step I.; and 2) classifying the vascular image as having enhanceable quality if the vascular image and the corrected vascular image are determined as having low quality and the corrected vascular image is classified as enhanceable in step 1).

In certain embodiments, the invention relates to a computer-implemented method for classification of the quality of a vascular image, the method comprising the steps of: I. classifying the quality of a vascular image according to the method of the invention; II. correcting the quality of the vascular image according to the method of the invention; IV. classifying the quality of the corrected vascular image according to the method of the invention; V. classifying quality enhanceability of the corrected vascular image according to the method of the invention; and VI. a) classifying the vascular image as having good quality if the vascular image and/or the corrected vascular image are/is classified as having high quality; and b) classifying the vascular image as having enhanceable quality if the vascular image and the corrected vascular image are determined as having low quality and the corrected vascular image is classified as enhanceable in step V).

Therefore, the means and methods described herein enable the classification of vascular images that not only considers their original quality but also identifies pictures that can be enhanced.

Accordingly, the invention is at least in part based on the surprising finding that the methods for classification according to the invention enable an improved classification that identifies quality and enhancability of vascular images in a standardized manner.

In certain embodiments, the invention relates to a computer-implemented method for classification of the quality of a vascular image, the method comprising the steps of: I. classifying the quality of a vascular image according to the method of the invention; II. correcting the quality of the vascular image according to the method of the invention; III. classifying the quality of the corrected vascular image according to the method of the invention; IV. classifying quality enhanceability of the corrected vascular image according to the method of the invention; and V. correcting the quality of the corrected vascular image according to the method of the invention and repeating the steps II) to IV) based on the classification in step IV); and VI. classifying the vascular image as having good quality if the vascular image and/or the corrected vascular image are/is classified as having high quality.

In certain embodiments, the invention relates to a computer-implemented method for classification of the quality of a vascular image, the method comprising the steps of: I. classifying the quality of a vascular image according to the method of the invention; II. correcting the quality of the vascular image according to the method of the invention; III. classifying the quality of the corrected vascular image according to the method of the invention; IV. classifying quality enhanceability of the corrected vascular image according to the method of the invention; and V. correcting the quality of the corrected vascular image according to the method of the invention and repeating the steps II) to IV) if the corrected vascular image is classified as enhanceable in step IV); and VI. classifying the vascular image as having good quality if the vascular image and/or the corrected vascular image are/is classified as having high quality.

In certain embodiments, the invention relates to the computer-implemented method of the invention, the method further comprising the steps of: I. classifying quality enhanceability of the corrected vascular image according to the method of the invention; and II. correcting the quality of the corrected vascular image according to the method of the invention if the corrected vascular image is classified as enhanceable in step IV) and repeating the correction of the corrected vascular image quality image according to the method of the invention, the classification of the quality of the corrected vascular image according to the method of the invention and the classification of the quality enhanceability of the corrected vascular image according to the method of the invention until the corrected vascular image is not classified as enhancable according to the method of the invention.

To save computer resources and/or time, not every vascular image processed by the invention needs to run through all the steps described herein. A vascular image can be excluded from further processing for example if the vascular image is considered as being of sufficient image quality and does not require further processing. In some embodiments, the vascular image can be excluded from certain steps of the method, if the image quality pattern of the (corrected) vascular image is too far below the predefined image quality threshold pattern.

The corrected vascular image may have different or new quality issues compared to the original vascular image or the amount of correction may be low after one cycle. Therefore, the method of the invention evaluates the enhanceablity of the corrected vascular image and repeats the correction after a successful correction cycle.

Therefore, the (corrected) vascular image can be repeatedly corrected until no further improvement or no substantial further improvement is achieved. By this repeated correction the vascular image can be optimally enhanced before eventual image quality assessment.

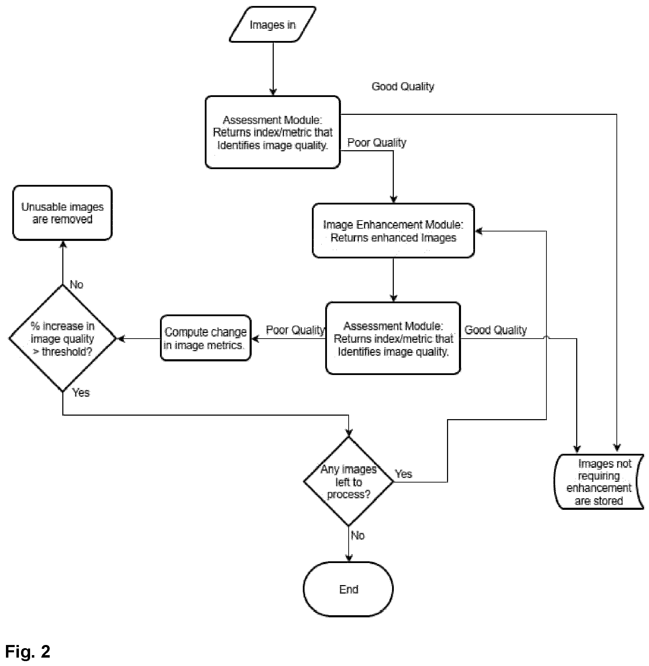

Therefore, the means and methods described herein enable the classification of vascular images that not only considers their original quality but also identifies pictures that can be enhanced by repeated enhancement steps (see, e.g., Fig. 2).

Accordingly, the invention is at least in part based on the surprising finding that the methods for classification according to the invention enables an improved classification that identifies more images of high quality in a standardized manner.

In certain embodiments, the invention relates to a computer-implemented method for obtainment of a quality enhanced vascular image, the method comprising the steps of: i. correcting the quality of a vascular image according to the method of the invention; ii. classifying quality in the corrected vascular image according to the method of the invention; iii. obtaining the quality enhanced vascular image by storing the corrected vascular image, based on the classification in step ii).

In certain embodiments, the invention relates to a computer-implemented method for obtainment of a quality enhanced vascular image, the method comprising the steps of: i. correcting the quality of a vascular image according to the method of the invention; ii. classifying quality in the corrected vascular image according to the method of the invention; iii. obtaining the quality enhanced vascular image by storing the corrected vascular image if the image is classified as having high quality in step ii).

Therefore, the means and methods described herein enable the obtainment of quality enhanced vascular images from vascular images having low quality according to the invention.

Accordingly, the invention is at least in part based on the surprising finding that it enables standardized obtainment of enhanced vascular images.

In certain embodiments, the invention relates to a computer-implemented method for obtainment of a quality enhanced vascular image, the method comprising the steps of: i. correcting the quality of a vascular image according to the method of the invention; ii. classifying quality in the corrected vascular image according to the method of the invention; iii. classifying quality enhanceability of the corrected vascular image according to the method of the invention based on the classification in step ii); iv. correcting the quality of the corrected vascular image according to the method of the invention and repeating the steps 2) to 4) based on the enhanceability classification; and v. obtaining the quality enhanced vascular image by storing the corrected vascular image if the image is classified as having high quality in step ii).

In certain embodiments, the invention relates to a computer-implemented method for obtainment of a quality enhanced vascular image, the method comprising the steps of: i. correcting the quality of a vascular image according to the method of the invention; ii. classifying quality in the corrected vascular image according to the method of the invention; iii. classifying quality enhanceability of the corrected vascular image according to the method of the invention if the corrected vascular image is classified as having low quality in step ii); iv. correcting the quality of the corrected vascular image according to the method of the invention and repeating the steps 2) to 4) if the corrected vascular image is classified as enhanceable; and v. obtaining the quality enhanced vascular image by storing the corrected vascular image if the image is classified as having high quality in step ii).

In certain embodiments, the invention relates to the computer-implemented method of the invention, the method further comprising the steps of: 1. classifying quality enhanceability of the corrected vascular image according to the method of the invention if the corrected vascular image is classified as having low quality in step ii); 2. correcting the quality of the corrected vascular image according to the method of the invention and repeating the correction if the corrected vascular image remains being classified as enhanceable.

Therefore, the means and methods described herein enable the obtainment of vascular images enhanced by repeated correction cycles.

Accordingly, the invention is at least in part based on the surprising finding that it enables standardized obtainment of repeatedly enhanced vascular images.

In some embodiments, the invention relates to a combination of the method for classification described herein and the method for obtaining an enhanced image described herein.

In certain embodiments, the invention relates to the computer-implemented method for classification according to the invention, wherein the brightness metric determination comprises segmentation and comparison thereof to a segment reference pattern.

In certain embodiments, the invention relates to the computer-implemented method for correction according to the invention, wherein the brightness metric determination comprises segmentation and comparison thereof to a segment reference pattern.

In certain embodiments, the invention relates to the computer-implemented method for obtainment according to the invention, wherein the brightness metric determination comprises segmentation and comparison thereof to a segment reference pattern.

The segmentation procedure may determine regions of varying intensity within the brightness image. The segmentation according to the brightness-related content can result in nested regions. A high number or dense nested regions is an indicator of highly variable regions close to one another, whereas only a few large regions could mean little to no brightness variation. The metrics mentioned here are obtained off of the segmentation according to brightness and may consider size, compactness, and/or count to determine correlated feature that indicated varying or uniform brightness.

In certain embodiments, the invention relates to the computer-implemented method for generating a Gabor filter response according to the invention, wherein the pixels of interest are obtained or partially obtained by determining a brightness metric.

In certain embodiments, the invention relates to the computer-implemented method for generating a Gabor filter response according to the invention, wherein the pixels of interest are obtained or partially obtained by determining a brightness metric, wherein the brightness metric determination comprises the steps of: a) segmentation of the vascular image; b) comparison of a segment to a segment reference pattern; and c) determining based whether the brightness of the segment is indicative of anatomical brightness or quality-related brightness alterations.

In certain embodiments, the invention relates to the computer-implemented method for classification according to the invention, wherein the brightness metric determination comprises the steps of: a) segmentation of the vascular image; b) comparison of a segment to a segment reference pattern; and c) determining based whether the brightness of the segment is indicative of anatomical brightness or quality-related brightness alterations.

In certain embodiments, the invention relates to the computer-implemented method for correction according to the invention, wherein the brightness metric determination comprises the steps of: a) segmentation of the vascular image; b) comparison of a segment to a segment reference pattern; and c) determining based whether the brightness of the segment is indicative of anatomical brightness or quality-related brightness alterations.

In certain embodiments, the invention relates to the computer-implemented method for obtainment according to the invention, wherein the brightness metric determination comprises the steps of: a) segmentation of the vascular image; b) comparison of a segment to a segment reference pattern; and c) determining based whether the brightness of the segment is indicative of anatomical brightness or quality-related brightness alterations.

In certain embodiments, the invention relates to the computer-implemented method for generating a multi-scale Gabor filter response according to the invention, wherein the pixels of interest are obtained or partially obtained by determining a brightness metric, wherein the brightness metric determination comprises the steps of: a) segmentation of the vascular image; b) comparison of a segment to a segment reference pattern; and c) determining based whether the brightness of the segment is indicative of anatomical brightness or quality-related brightness alterations, wherein the segment is a segment with having an abnormal brightness level, wherein an abnormal brightness level is a brightness level below a minimal brightness threshold value or a brightness level above a maximal brightness threshold value.

In certain embodiments, the invention relates to the computer-implemented method for classification according to the invention, wherein the segment is a segment with having an abnormal brightness level, wherein an abnormal brightness level is a brightness level below a minimal brightness threshold value or a brightness level above a maximal brightness threshold value.

In certain embodiments, the invention relates to the computer-implemented method for correction according to the invention, wherein the segment is a segment with having an abnormal brightness level, wherein an abnormal brightness level is a brightness level below a minimal brightness threshold value or a brightness level above a maximal brightness threshold value.

In certain embodiments, the invention relates to the computer-implemented method for obtainment according to the invention, wherein the segment is a segment with having an abnormal brightness level, wherein an abnormal brightness level is a brightness level below a minimal brightness threshold value or a brightness level above a maximal brightness threshold value.

The term "segment reference pattern", as used herein, refers to a pattern that allows distinguishing between biological and technical artefacts. Biological artefacts refer to anomalies on the image that represent for example a pathologic and/or physiologic characteristic. Technical artefacts refer to anomalies on the image that represent for example poor image quality, e.g., artefacts created by the capturing process. In some embodiments the segment reference pattern allows distinguishing the artefacts based on location, form factor, sharpness, brightness and/or contrast. In some embodiments, the segment reference pattern is obtainable by a machine - learning technique.

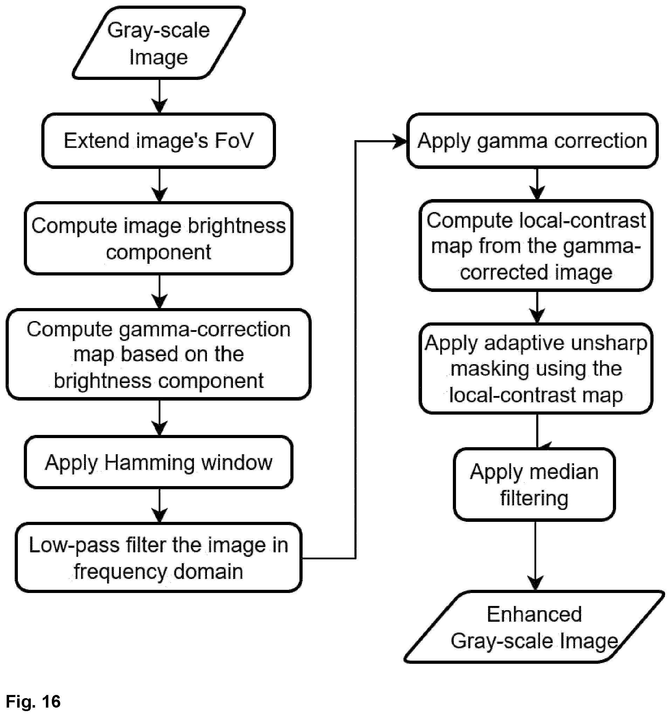

Vascular images often comprise imaging artefacts such as bright flashes with various shapes and sizes, including but not limited to, streaks, patches, discs, and rings. These technical artefacts can have substantially different brightness values and may therefore distort the image quality score of an otherwise high quality image (e.g. a gradable image)(See, e.g., Fig. 16 of PCT/CA2022/051047).

Therefore, the methods described herein can in some embodiments distinguish, whether abnormal brightness variation is caused by the anatomy/physiology or by a technical artefact.

In some embodiments, an area of an artefact that is associated with a pathology are differently weighted (e.g., excluded) for further determination of image quality, without altering the image content of the artefact that is associated with a pathology.

Accordingly, the invention is at least in part based on the surprising finding that brightness in the context of the invention can be determined particularly accurately by distinguishing between biological segments and technical artefact segments.

In certain embodiments, the invention relates to the computer-implemented method for generating a multi-scale Gabor filter response according to the invention, wherein the pixels of interest are obtained or partially obtained by determining a brightness metric, wherein brightness metric comprises using a region growing segmentation.

In certain embodiments, the invention relates to the computer-implemented method for classification according to the invention, wherein brightness metric comprises segmentation using region growing segmentation.

In certain embodiments, the invention relates to the computer-implemented method for correction according to the invention, wherein brightness metric comprises segmentation using region growing segmentation.

In certain embodiments, the invention relates to the computer-implemented method for obtainment according to the invention, wherein brightness metric comprises segmentation using region growing segmentation.

The term "region growing segmentation", as used herein, refers to a segmentation method, wherein a pixel is compared with its neighbors and if a similarity criterion is satisfied, the pixel is set to belong to the same cluster as one or more of its neighbors. The region growing segmentation procedure has proven to be efficient in appropriate segmentation of technical artefacts of various sizes and with unpredictable locations

Accordingly, the invention is at least in part based on the surprising finding that brightness in the context of the invention can be determined particularly accurately by using segmentation.

In certain embodiments, the invention relates to the computer-implemented method for generating a multi-scale Gabor filter response according to the invention, wherein the pixels of interest are obtained or partially obtained by determining a brightness metric, wherein brightness metric comprises using a fuzzy membership function.

In certain embodiments, the invention relates to the computer-implemented method for classification according to the invention, wherein brightness metric comprises segmentation using a fuzzy membership function.

In certain embodiments, the invention relates to the computer-implemented method for correction according to the invention, wherein brightness metric comprises segmentation using a fuzzy membership function.

In certain embodiments, the invention relates to the computer-implemented method for obtainment according to the invention, wherein brightness metric comprises segmentation using a fuzzy membership function.

In certain embodiments, the invention relates to the computer-implemented method for generating a multi-scale Gabor filter response according to the invention, wherein the pixels of interest are obtained or partially obtained by determining a brightness metric, wherein brightness metric comprises using a fuzzy membership function and region growing segmentation.

In certain embodiments, the invention relates to the computer-implemented method for classification according to the invention, wherein brightness metric comprises segmentation using a fuzzy membership function and region growing segmentation.

In certain embodiments, the invention relates to the computer-implemented method for correction according to the invention, wherein brightness metric comprises segmentation using a fuzzy membership function and region growing segmentation.

In certain embodiments, the invention relates to the computer-implemented method for obtainment according to the invention, wherein brightness metric comprises segmentation using a fuzzy membership function and region growing segmentation.

In certain embodiments, the invention relates to the computer-implemented method for classification according to the invention, wherein the brightness metric comprises the segmentation of the vascular image comprises using a fuzzy membership function and/or region growing segmentation.

In certain embodiments, the invention relates to the computer-implemented method for correction according to the invention, wherein the brightness metric comprises the segmentation of the vascular image comprises using a fuzzy membership function and/or region growing segmentation.

In certain embodiments, the invention relates to the computer-implemented method for obtainment according to the invention, wherein the brightness metric comprises the segmentation of the vascular image comprises using a fuzzy membership function and/or region growing segmentation.

The term "fuzzy membership function", as used herein, refers to a function to classify data according to a degree of membership in a fuzzy set that varies continuously from zero (not a member) to one (absolutely a member).

In some embodiments, the invention relates to the computer-implemented method for classification according to the invention or the computer-implemented method for obtainment according to the invention, wherein the field of view mask area is segmented using the 1.1.1.2. Brightness Segmentation Module - Region Growing (see, e.g., Fig. 9).

Technical artefacts have unpredictable brightness gradients in particular in their boundaries. The fuzzy membership function has proven surprisingly efficient in the adequate segmentation and boundaries definition of technical artefacts of various boundary brightness gradients.

Accordingly, the invention is at least in part based on the surprising finding that brightness in the context of the invention can be determined particularly accurately by using a fuzzy membership function and/or region growing segmentation for segmentation according to brightness.

In certain embodiments, the invention relates to the computer-implemented method for generating a multi-scale Gabor filter response according to the invention, wherein the pixels of interest are obtained or partially obtained by determining a brightness metric, wherein the brightness metric comprises homomorphic filtering.

In certain embodiments, the invention relates to the computer-implemented method for classification according to the invention, wherein the brightness metric comprises homomorphic filtering.

In certain embodiments, the invention relates to the computer-implemented method for correction according to the invention, wherein the brightness metric comprises homomorphic filtering.

In certain embodiments, the invention relates to the computer-implemented method for obtainment according to the invention, wherein the brightness metric comprises homomorphic filtering.

In certain embodiments, the invention relates to the computer-implemented method for generating a multi-scale Gabor filter response according to the invention, wherein the pixels of interest are obtained or partially obtained by determining a brightness metric, wherein the brightness metric comprises comparing at least part of the brightness metrics of the vascular image to a brightness reference image, preferably comparing the radial spectral power density to a reference image.

In certain embodiments, the invention relates to the computer-implemented method for classification according to the invention, wherein the brightness metric comprises comparing at least part of the brightness metrics of the vascular image to a brightness reference image, preferably comparing the radial spectral power density to a reference image.

In certain embodiments, the invention relates to the computer-implemented method for correction according to the invention, wherein the brightness metric comprises comparing at least part of the brightness metrics of the vascular image to a brightness reference image, preferably comparing the radial spectral power density to a reference image.

In certain embodiments, the invention relates to the computer-implemented method for obtainment according to the invention, wherein the brightness metric comprises comparing at least part of the brightness metrics of the vascular image to a brightness reference image, preferably comparing the radial spectral power density to a reference image.

In certain embodiments, the invention relates to the computer-implemented method for generating a multi-scale Gabor filter response according to the invention, wherein the pixels of interest are obtained or partially obtained by determining a brightness metric, wherein the brightness metric comprises determining a Fourier transformation of the vascular image, wherein a frequencies above a Fourier transformation frequency threshold contribute more to the brightness metric than the frequencies below the Fourier transformation frequency threshold, preferably wherein frequencies below the Fourier transformation frequency threshold are excluded from the brightness metric computation.

In certain embodiments, the invention relates to the computer-implemented method for classification according to the invention, wherein the brightness metric comprises determining a Fourier transformation of the of the vascular image, wherein a frequencies above a Fourier transformation frequency threshold contribute more to the brightness metric than the frequencies below the Fourier transformation frequency threshold, preferably wherein frequencies below the Fourier transformation frequency threshold are excluded from the brightness metric computation.

In certain embodiments, the invention relates to the computer-implemented method for correction according to the invention, wherein the brightness metric comprises determining a Fourier transformation of the of the vascular image, wherein a frequencies above a Fourier transformation frequency threshold contribute more to the brightness metric than the frequencies below the Fourier transformation frequency threshold, preferably wherein frequencies below the Fourier transformation frequency threshold are excluded from the brightness metric computation.

In certain embodiments, the invention relates to the computer-implemented method for obtainment according to the invention, wherein the brightness metric comprises determining a Fourier transformation of the of the vascular image, wherein a frequencies above a Fourier transformation frequency threshold contribute more to the brightness metric than the frequencies below the Fourier transformation frequency threshold, preferably wherein frequencies below the Fourier transformation frequency threshold are excluded from the brightness metric computation.

In certain embodiments, the invention relates to the computer-implemented method for classification according to the invention, wherein the brightness metric comprises determining a Fourier transformation and low-pass filtering.

In certain embodiments, the invention relates to the computer-implemented method for correction according to the invention, wherein the brightness metric comprises determining a Fourier transformation and low-pass filtering.

In certain embodiments, the invention relates to the computer-implemented method for obtainment according to the invention, wherein the brightness metric comprises determining a Fourier transformation and low-pass filtering.

In some embodiments, the vascular image is transformed to the spectral domain (e.g. via Fourier transform) and then a filter (e.g. a Butterworth filter), is applied to the spectral representation of the image. In some embodiments, the filtered spectral representation of the image is used for the extraction of further features. In some embodiments, the filtered spectral representation is then transformed back to the spatial domain (via the appropriate inverse transform) and additional features are computed on the spatial-domain filtered image.

The term "Fourier transformation", as used herein, refers to a mathematical transformation of the image that decomposes functions depending on space or time into functions depending on spatial or temporal frequency. The Fourier transformation may include convolving the image with a frequency-based filter, wherein the operation results in multiplication in the frequency domain. In some embodiments, the Fourier transformation is selected from the group of Fast Fourier transformation, discrete Fourier transformation, discrete-time Fourier transformation, and inverse Fourier transformation.

The term "low-pass filtering", as used herein, refers to a filtering method that passes signals with a frequency or wavelength lower than a selected cutoff frequency or wavelength and attenuates signals with frequencies or wavelengths higher than the cutoff frequency or wavelength. The optimal selection of cut-off frequency may be achieved, e.g., by starting with a cut-off frequency for example in the 10th percentile of the lowest frequency range (from zero) and subsequently using a training set of images (exclusive of those we validated the results on) to determine an adequate cut-off range of the filter to fine-tune the most optimal frequency point. Alternatively the cut-off frequency can by determined by relating it to the spatial and physiological characteristics of the objects to be removed or retained.

The advantage of using Fourier transformation and/or low-pass filtering is the reduction of required computer resources and required time in the context of the invention. This increased efficiency enables the implementation to be used, e.g., in real-time, on mobile devices and/or with a lower data transfer requirement. In some embodiments, the fast Fourier transform is used in the context of inverse operation.

Accordingly, the invention is at least in part based on the surprising finding that brightness in the context of the invention can be determined particularly efficiently and accurately by using Fourier transformation and/or low-pass filtering.

In certain embodiments, the invention relates to the computer-implemented method for generating a multi-scale Gabor filter response according to the invention, wherein the pixels of interest are obtained or partially obtained by determining a brightness metric, wherein the brightness metric comprises determining at least one brightness metric selected from the group of angular spectral power density, image moment, histogram metric and radial spectral power density.

In certain embodiments, the invention relates to the computer-implemented method for classification according to the invention, wherein the brightness metric comprises determining at least one brightness metric selected from the group of angular spectral power density, image moment, histogram metric and radial spectral power density.

In certain embodiments, the invention relates to the computer-implemented method for correction according to the invention, wherein the brightness metric comprises determining at least one brightness metric selected from the group of angular spectral power density, image moment, histogram metric and radial spectral power density.

In certain embodiments, the invention relates to the computer-implemented method for obtainment according to the invention, wherein the brightness metric comprises determining at least one brightness metric selected from the group of angular spectral power density, image moment, histogram metric and radial spectral power density.

The term "spectral power density", as used herein, refers to the spread of the energy of a signal/image over a band of frequency. Therefore, the power spectral density can represent a measure of the power across a frequency band in the frequency domain of the image/signal.

The term "angular spectral power density", as used herein, refers to the angularly (over a certain range of orientation, for 0 to 180 degrees) average value of the spectral power density. Therefore, the angular spectral power can represent the density distribution of the power spectral density as a function of angle or orientation, over the range 0 to 180 degrees, in the image.

The angular spectral power density of brightness as described herein can be used to determine angular spectral power density metrics such as standard deviation, entropy, and coefficient of variation. In some embodiments, one or more angular spectral power density metrics are compared to the brightness reference image.

The term "image moment", as used herein, refers to a particularly weighted average of the image pixels' intensities. In some embodiments, the image moment described herein is at least one image moment selected from the group of Cartesian image moment, Legendre image moment, and Zernike image moment.

The term "histogram metric", as used herein, refers to a metric the histogram representation of an image metric. The Histogram metrics of brightness as described herein include, without limitation, mean brightness, standard deviation, skewness, kurtosis, and/or the coefficient of variation.

The term "radial spectral power density", as used herein, refers to radially averaged spectral power density.

The radial spectral power density of brightness as described herein can be used to determine angular spectral power density metrics such as standard deviation, kurtosis, and entropy. In some embodiments, one or more radial spectral power density metrics are compared to the brightness reference image.

In some embodiments, the invention relates to the computer-implemented method for classification according to any one of the invention or the computer-implemented method for obtainment according to the invention, wherein brightness is determined by two, three or four brightness metrics selected from the group of angular spectral power density, image moment, histogram metric and radial spectral power density.

The brightness metrics described herein deliver a comprehensive characterization of the brightness-related image quality characteristics of a vascular image (see, e.g., 1.1.1. Brightness Assessment, Fig. 5).

Accordingly, the invention is at least in part based on the surprising finding that brightness in the context of the invention can be determined particularly accurately by using angular spectral power density, image moment, histogram metric, and/or radial spectral power density.

In certain embodiments, the invention relates to the computer-implemented method for classification according to the invention, wherein determining the contrast metric comprises comparison of the intensity distributions of a foreground and a background region.

In certain embodiments, the invention relates to the computer-implemented method for correction according to the invention, wherein determining the contrast metric comprises comparison of the intensity distributions of a foreground and a background region.

In certain embodiments, the invention relates to the computer-implemented method for obtainment according to the invention, wherein determining the contrast metric comprises comparison of the intensity distributions of a foreground and a background region.

In certain embodiments, the invention relates to the computer-implemented method for classification according to the invention, wherein the foreground region of the vessel contrast are the vessels and the background regions of the vessel contrast are regions adjacent to the vessels, wherein each foreground region has a corresponding background region with at least 50%, at least 60%, at least 70%, at least 80%, at least 90%, at least 95% or 100% of the area of the foreground region, preferably wherein each background region covers all borders of the foreground region.

In certain embodiments, the invention relates to the computer-implemented method for correction according to the invention or the computer-implemented method for obtainment according to the invention, wherein the foreground region of the vessel contrast are the vessels and the background regions of the vessel contrast are regions adjacent to the vessels, wherein each foreground region has a corresponding background region with at least 50%, at least 60%, at least 70%, at least 80%, at least 90% or at least 95% of the area of the foreground region, preferably wherein each background region covers all borders of the foreground region.

In certain embodiments, the invention relates to the computer-implemented method for obtainment according to the invention, wherein the foreground region of the vessel contrast are the vessels and the background regions of the vessel contrast are regions adjacent to the vessels, wherein each foreground region has a corresponding background region with at least 50%, at least 60%, at least 70%, at least 80%, at least 90% or at least 95% of the area of the foreground region, preferably wherein each background region covers all borders of the foreground region.

In certain embodiments, the vessel contrast described herein is indicative of the vessel contrast of more than 50%, more than 60%, more than 70%, more than 80%, more than 90% or all identifiable vessels.

The background regions adjacent to the foreground region can be generated individually for each image. This enables efficient, precise and orientation-independent contrast and/or quality determination. Furthermore, the method does not require physiological structures to be present, for example the quality of vascular images with an ONH can be compared to the quality of vascular images that do not include an ONH.

Accordingly, the invention is at least part based on a way to determine the quality of pictures that were not determinable by the methods known in the art, e.g. methods that use the ONH for orientation.

In certain embodiments, the invention relates to the computer-implemented method for classification according to the invention, the computer-implemented method for correction according to the invention, or the computer-implemented method for obtainment according to the invention, wherein the contrast metric comprises determining the statistical distribution of contrast values.

In certain embodiments, the statistical distribution of contrast values described herein comprises the mean and covariance of the statistical distribution of contrast values.

In certain embodiments, the invention relates to the computer-implemented method for classification according to the invention, wherein determining the contrast metric comprises determining a Jeffries Matusita Distance and/or Jensen-Shannon Divergence between the foreground and the background region.

In certain embodiments, the invention relates to the computer-implemented method for correction according to the invention or the computer-implemented method for obtainment according to the invention, wherein determining the contrast metric comprises determining a Jeffries Matusita Distance and/or Jensen-Shannon Divergence between the foreground and the background region.

In certain embodiments, the invention relates to the computer-implemented method for obtainment according to the invention, wherein determining the contrast metric comprises determining a Jeffries Matusita Distance and/or Jensen-Shannon Divergence between the foreground and the background region.

In certain embodiments, the invention relates to the computer-implemented method for classification according to the invention, wherein the contrast metric comprises determining a Jeffries Matusita Distance and/or Jensen-Shannon Divergence.

In certain embodiments, the invention relates to the computer-implemented method for correction according to the invention, wherein the contrast metric comprises determining a Jeffries Matusita Distance and/or Jensen-Shannon Divergence.

In certain embodiments, the invention relates to the computer-implemented method for obtainment according to the invention, wherein the contrast metric comprises determining a Jeffries Matusita Distance and/or Jensen-Shannon Divergence.

Jeffries Matusita Distance accounts for the means as well as the covariances of the statistical distributions of the values being compared. It treats each distribution as a whole, rather than comparing bin by bin as done in similar methods. In some embodiments, the Jeffries Matusita Distance described herein is bounded, for example, bounded in the range of [0,sqrt2].

Jensen-Shannon Divergence provides a symmetric measure of non-mutual information compared to similar methods. In some embodiments, the Jensen-Shannon Divergence described herein is bounded, for example, bounded in the range of [0,1].

Jeffries Matusita Distance and Jensen-Shannon Divergence do not require a reference distribution. These measures are designed to measure the "distance" between two distributions. Thus they take into account shape differences, as well as differences in location (i.e. mean). Other methods such as the point-to-point Euclidean distance do not consider the mean and covariance of the distributions explicitly. Therefore, the Jeffries Matusita Distance and Jensen-Shannon Divergence contribute to the accuracy of the method of the invention.

Accordingly, the invention is at least in part based on the surprising finding that determining distance and divergence, in particular, Jeffries Matusita Distance and/or Jensen-Shannon Divergence of segments determined based on contrast improves the accuracy of the methods of the invention.

In certain embodiments, the invention relates to the computer-implemented method for classification according to the invention, wherein global contrast is determined using at least 50%, at least 60%, at least 70%, at least 80%, at least 90% or at least 95% of the pixels of the image.

In certain embodiments, the invention relates to the computer-implemented method for correction according to the invention, wherein global contrast is determined using at least 50%, at least 60%, at least 70%, at least 80%, at least 90% or at least 95% of the pixels of the image.

In certain embodiments, the invention relates to the computer-implemented method for obtainment according to the invention, wherein global contrast is determined using at least 50%, at least 60%, at least 70%, at least 80%, at least 90% or at least 95% of the pixels of the image.

In certain embodiments, the invention relates to the computer-implemented method for classification according to the invention, the computer-implemented method for correction according to the invention, or the computer-implemented method for obtainment according to the invention, wherein the contrast metric comprises determining segments indicative for additional biologic structures.

The term "biologic structure", as used herein refers to at least one-pixel cluster on the vascular image that represents a biologic entity. In some embodiments, the biologic structure represents at least one biologic entity selected from the group of vessels, tissue parts, lesions, cells, cell clusters, cell types, pathologic structures (e.g. lesions), body-liquids, and biological messengers (e.g., cellular messengers, neuronal messengers). In some embodiments, the biologic entity is labeled (e.g. by a radioactive label or a fluorescent label) and/or highlighted (e.g., by a contrast agent). In some embodiments, the biologic structures on the vascular image are identified by comparing the vascular image to a biologic structure reference pattern. In some embodiments, the biologic structure reference pattern described herein is obtainable by a machine-learning technique. In some embodiments, the biologic structures on the vascular image are identified by Fourier transformation and a filtering technique.

The biologic structures on the vascular image comprise significant biological and diagnostic information. Therefore, the properties and/or the image quality of the biologic structure are/is particularly relevant for subsequent grading and/or diagnosing. The presence of (an) abnormal biologic structure(s) may facilitate gradeability. Therefore, an image demonstrating (an) abnormal biologic structure(s) may be considered to have an increased corrected image quality score. In some embodiments, at least one property of the biologic structure(s) influence(s) the corrected image quality score. In some embodiments, the property of the biologic structure segment(s) is at least one property selected from the group of location, distribution, form (e.g., circularity or aspect ratio), and size.

In some embodiments, the invention relates to the computer-implemented method for classification according to the invention or the computer-implemented method for obtainment according to the invention, wherein the distance and/or divergence of biologic structure segments is determined.

The distribution and or separability of segments on the vascular image determined based on the contrast comprises information about the image quality of the vascular image. For example, a blurry image usually results in missing contrast segments, and therefore unusual distance and/or divergence between the segments determined based on contrast (See e.g., 1.1.2. Contrast Assessment, Fig. 6).

In certain embodiments, the invention relates to the computer-implemented method for classification according to the invention, wherein the contrast metric comprises lesion segments.

In certain embodiments, the invention relates to the computer-implemented method for correction according to the invention, wherein the contrast metric comprises lesion segments.

In certain embodiments, the invention relates to the computer-implemented method for obtainment according to the invention, wherein the contrast metric comprises lesion segments.

The term "lesion segment", as used herein, refers to segmentation that results in at least one lesion area.

In some embodiments, the lesion area is identified by comparing the vascular image to a lesion reference pattern. In some embodiments, the lesion reference pattern described herein is obtainable by a machine-learning technique. In some embodiments, a supervised machine learning technique is used to generate the lesion reference pattern described herein. In some embodiments, the supervised machine learning technique described herein is a trained convolutional neural network, such as a deep convolutional neural network. In some embodiments, the supervised machine learning technique described herein is trained and/or validated using labeled data (see e.g., Example 5).

The lesions on the vascular image comprise significant biological and diagnostic information. Therefore, the properties and/or the image quality of the lesions segment is particularly relevant for subsequent grading and/or diagnosing. The presence of (an) abnormal lesion(s) may facilitate gradeability. Therefore, an image demonstrating (an) abnormal lesion(s) may be considered to have an increased corrected image quality score. In some embodiments, at least one property of the lesion segment(s) influence(s) the corrected image quality score. In some embodiments, the property of the lesion segment(s) is at least one property selected from the group of location, distribution, form (e.g., circularity or aspect ratio), and size.

Accordingly, the invention is at least in part based on the surprising finding that contrast relevant for image quality in the context of the invention can be determined particularly accurately by using lesion segmentation.

In certain embodiments, the invention relates to the computer-implemented method for classification according to the invention, wherein the contrast metric comprises determining super-pixel segments.

In certain embodiments, the invention relates to the computer-implemented method for correction according to the invention, wherein the contrast metric comprises determining super-pixel segments.

In certain embodiments, the invention relates to the computer-implemented method for obtainment according to the invention, wherein the contrast metric comprises determining super-pixel segments.

In certain embodiments, the invention relates to the computer-implemented method for classification according to the invention, wherein the contrast metric comprises determining super-pixel segments and lesion segments.

In certain embodiments, the invention relates to the computer-implemented method for correction according to the invention, wherein the contrast metric comprises determining super-pixel segments and lesion segments.

In certain embodiments, the invention relates to the computer-implemented method for obtainment according to the invention, wherein the contrast metric comprises determining super-pixel segments and lesion segments.

The term "super-pixel segment", as used herein, refers to a segment of a tangential group of pixels that are similar or equal in a certain metric. In embodiments, wherein the super-pixel segments are determined based on the contrast of the vascular image, the super-pixel segment is a segment of a tangential group of pixels that are similar or equal in a contrast metric.

In certain embodiments, the invention relates to the computer-implemented method for classification according to the invention, wherein the super-pixel segments are nonoverlapping clusters of pixels clustered based on color similarity and distance from a seed pixel.

In certain embodiments, the invention relates to the computer-implemented method for correction according to the invention, wherein the super-pixel segments are nonoverlapping clusters of pixels clustered based on color similarity and distance from a seed pixel.

In certain embodiments, the invention relates to the computer-implemented method for obtainment according to the invention, wherein the super-pixel segments are nonoverlapping clusters of pixels clustered based on color similarity and distance from a seed pixel.

In certain embodiments, the invention relates to the computer-implemented method for classification according to the invention, wherein the super-pixel segments are nonoverlapping clusters of pixels clustered based on a) color similarity or intensity similarity; and b) distance from a seed pixel.

In certain embodiments, the invention relates to the computer-implemented method for correction according to the invention, wherein the super-pixel segments are nonoverlapping clusters of pixels clustered based on a) color similarity or intensity similarity; and b) distance from a seed pixel.

In certain embodiments, the invention relates to the computer-implemented method for obtainment according to the invention, wherein the super-pixel segments are nonoverlapping clusters of pixels clustered based on a) color similarity or intensity similarity; and b) distance from a seed pixel.

For example, if the vascular image is a colored image, the clustering may be based on color similarity and if the vascular image is a grayscale image or converted thereto, the clustering may be based on intensity similarity.

In some embodiments, the super-pixel segments described herein are obtained by the 1.1.2.1. Super-pixel Module (see, e.g., Fig. 10).

The use of a clustering-based segmentation method such as a super-pixel segmentation as described herein contributes to the accuracy of the method and enables standardized global contrast-based segmentation without the requirement of a reference pattern.

Accordingly, the invention is at least in part based on the surprising finding that contrast in the context of the invention can be determined particularly accurately by using super-pixel segmentation.

In certain embodiments, the invention relates to the computer-implemented method for classification according to the invention, wherein the foreground regions are super-pixel segments and the background regions are regions adjacent to the foreground region, wherein each foreground region has a corresponding background region with at least 50% , at least 60%, at least 70%, at least 80%, at least 90% or at least 95% of the area of the foreground region, preferably wherein each background region covers all borders of the foreground region.

In certain embodiments, the invention relates to the computer-implemented method for correction according to the invention, wherein the foreground regions are super-pixel segments and the background regions are regions adjacent to the foreground region, wherein each foreground region has a corresponding background region with at least 50%, at least 60%, at least 70%, at least 80%, at least 90% or at least 95% of the area of the foreground region, preferably wherein each background region covers all borders of the foreground region.

In certain embodiments, the invention relates to the computer-implemented method for obtainment according to the invention, wherein the foreground regions are super-pixel segments and the background regions are regions adjacent to the foreground region, wherein each foreground region has a corresponding background region with at least 50%, at least 60%, at least 70%, at least 80%, at least 90% or at least 95% of the area of the foreground region, preferably wherein each background region covers all borders of the foreground region.

In certain embodiments, the invention relates to the computer-implemented method for classification according to the invention, wherein the Laplacian Energy of at least one vessel segment and/or in at least one lesion segment is determined.

In certain embodiments, the invention relates to the computer-implemented method for correction according to the invention, wherein the Laplacian Energy of at least one vessel segment and/or in at least one lesion segment is determined.

In certain embodiments, the invention relates to the computer-implemented method for obtainment according to the invention, wherein the Laplacian Energy of at least one vessel segment and/or in at least one lesion segment is determined.

The term "Laplacian Energy", as used herein, refers to is a measure of high-frequency content in the image. In some embodiments, the Laplacian Energy described herein is determined by the application of a 3x3 Laplacian mask as a gradient operator. Large values of the gradient correspond to the presence of sharp features in the image as described by R. Rangayyan 2015, "Biomedical Signal Analysis", John Wiley & Sons.

In some embodiments, the Laplacian energy described herein is a normalized Laplacian energy. The Laplacian energy can be normalized by using the comparison of the Laplacian energy of the original image and the Laplacian energy of the brightness normalized image, wherein the brightness normalization is achieved using the comparison of the image to the brightness reference image. In some embodiments, the Laplacian energy is normalized by the sum of the squared deviations from the mean of the image.

The use of the Laplacian energy as described herein provides a measure independent of the average image brightness and improves characterization of image sharpness (e.g. edge sharpness) and contrast. Therefore, the Laplacian energy contributes to the accuracy of the means and method of the invention.

Accordingly, the invention is at least in part based on the surprising finding that contrast in the context of the invention can be determined particularly accurately by using Laplacian Energy.

In certain embodiments, the invention relates to the computer-implemented method for classification according to the invention, wherein sharpness metric comprises determining a Fourier transformation of the vascular image, wherein a band of frequency of the Fourier transform contributes more to the sharpness metric than the frequencies higher and lower than the band of frequency of the Fourier transform, preferably wherein frequencies higher and lower than the band of frequency of the Fourier transform are excluded from sharpness metric computation.

In certain embodiments, the invention relates to the computer-implemented method for correction according to the invention, wherein sharpness metric comprises determining a Fourier transformation of the vascular image, wherein a band of frequency of the Fourier transform contributes more to the sharpness metric than the frequencies higher and lower than the band of frequency of the Fourier transform, preferably wherein frequencies higher and lower than the band of frequency of the Fourier transform are excluded from sharpness metric computation.

In certain embodiments, the invention relates to the computer-implemented method for obtainment according to the invention, wherein sharpness metric comprises determining a Fourier transformation of the vascular image, wherein a band of frequency of the Fourier transform contributes more to the sharpness metric than the frequencies higher and lower than the band of frequency of the Fourier transform, preferably wherein frequencies higher and lower than the band of frequency of the Fourier transform are excluded from sharpness metric computation.

In certain embodiments, the invention relates to the computer-implemented method for classification according to the invention, wherein sharpness metric comprises determining a Fourier transformation and bandpass filtering.

In certain embodiments, the invention relates to the computer-implemented method for correction according to the invention, wherein sharpness metric comprises determining a Fourier transformation and bandpass filtering.

In certain embodiments, the invention relates to the computer-implemented method for obtainment according to the invention, wherein sharpness metric comprises determining a Fourier transformation and bandpass filtering.

The term "bandpass filtering", as used herein, refers to a filtering method that passes signals with a frequency or wavelength within a selected frequency bandwidth or wavelength bandwidth and attenuates signals with frequencies or wavelengths outside the selected bandwidth. In some embodiments, the bandwidth described herein is defined by an upper limit and a lower limit. In some embodiments, the bandwidth described herein is defined by a frequency with or wavelength width. Estimation of the cut-off boundaries depends on the nature of the images being processed (e.g., tissue type, capturing technique, patient group). For example, the cut-off boundaries depend on the estimated size of the blood vessels in retinal images and their correspondence with spatial frequency. The cut-off boundaries for adult retinal images can be determined by the normalized radial frequency range corresponded to the typical blood vessels. Then these boundaries are varied around an initial estimate to fine-tune the cut-off frequencies.

The advantage of using Fourier transformation and/or band-pass filtering is the reduction of required computer resources and required time in the context of the invention. This increased efficiency enables the implementation to be used, e.g., in real-time, on mobile devices and/or with a lower data transfer requirement.

Accordingly, the invention is at least in part based on the surprising finding that sharpness in the context of the invention can be determined particularly accurately by using Fourier transformation and bandpass filtering.

In certain embodiments, the invention relates to the computer-implemented method for classification according to the invention, wherein the sharpness comprises at least one sharpness metric selected from the group of L* channel metric, angular spectral power density, and radial spectral power density.

In certain embodiments, the invention relates to the computer-implemented method for correction according to the invention, wherein the sharpness comprises at least one sharpness metric selected from the group of L* channel metric, angular spectral power density, and radial spectral power density.

In certain embodiments, the invention relates to the computer-implemented method for obtainment according to the invention, wherein the sharpness comprises at least one sharpness metric selected from the group of L* channel metric, angular spectral power density, and radial spectral power density.

In certain embodiments, the invention relates to the computer-implemented method for classification according to the invention, wherein the sharpness comprises at least one sharpness metric selected from the group of L* channel metric, angular spectral power density, and radial spectral power density, wherein the L* channel the L* channel of the CIELAB color space and wherein the angular spectral power density and radial spectral power density are determined from the frequency response on the vascular image.

In certain embodiments, the invention relates to the computer-implemented method for correction according to the invention, wherein the sharpness comprises at least one sharpness metric selected from the group of L* channel metric, angular spectral power density, and radial spectral power density, wherein the L* channel the L* channel of the CIELAB color space and wherein the angular spectral power density and radial spectral power density are determined from the frequency response on the vascular image.

In certain embodiments, the invention relates to the computer-implemented method for obtainment according to the invention, wherein the sharpness comprises at least one sharpness metric selected from the group of L* channel metric, angular spectral power density, and radial spectral power density, wherein the L* channel the L* channel of the CIELAB color space and wherein the angular spectral power density and radial spectral power density are determined from the frequency response on the vascular image.

In certain embodiments, the invention relates to the computer-implemented method for classification according to the invention, wherein the L* channel metric is an L* channel-derived Form Factor and/or L* channel-derived Laplacian Energy, wherein the L* channel-derived Form Factor is a measure of the relative L* channel variation between a 2D spatial signal and its first and second derivatives and wherein the Laplacian Energy is a measure of content in a high-frequency band of the image.

In certain embodiments, the invention relates to the computer-implemented method for correction according to the invention, wherein the L* channel metric is an L* channel-derived Form Factor and/or L* channel-derived Laplacian Energy, wherein the L* channel-derived Form Factor is a measure of the relative L* channel variation between a 2D spatial signal and its first and second derivatives and wherein the Laplacian Energy is a measure of content in a high-frequency band of the image.

In certain embodiments, the invention relates to the computer-implemented method for obtainment according to the invention, wherein the L* channel metric is an L* channel-derived Form Factor and/or L* channel-derived Laplacian Energy, wherein the L* channel-derived Form Factor is a measure of the relative L* channel variation between a 2D spatial signal and its first and second derivatives and wherein the Laplacian Energy is a measure of content in a high-frequency band of the image.

The term "L* channel metric", as used herein, refers to a metric obtained from the L channel of the HSL color model and/or the LAB color model. For example, the L-channel can be obtained by conversion of an RGB image to CIELAB (LAB) color space and subsequent extraction the L* channel.

L* channel metric, angular spectral power density, and/ radial spectral power density comprise information that is particularly relevant for quality assessment.

Accordingly, the invention is at least in part based on the surprising finding that sharpness in the context of the invention can be determined particularly accurately by using an L* channel metric, angular spectral power density, and/or radial spectral power density.

In certain embodiments, the invention relates to the computer-implemented method for classification according to the invention, the computer-implemented method for correction according to the invention, or the computer-implemented method for obtainment according to the invention, wherein the radial spectral power density is used to determine extreme value distribution.

In certain embodiments, the invention relates to the computer-implemented method for classification according to the invention, wherein the radial spectral power density is used to determine generalized extreme value distribution.

In certain embodiments, the invention relates to the computer-implemented method for correction according to the invention, wherein the radial spectral power density is used to determine generalized extreme value distribution.

In certain embodiments, the invention relates to the computer-implemented method for obtainment according to the invention, wherein the radial spectral power density is used to determine generalized extreme value distribution.

The term "generalized extreme value distribution", as used herein, refers to a combination of type I, II and III extreme value distributions and is a form of statistical data distribution that increases sharply on one side with a slow decay on the other, leading to a long-tailed distribution. In some embodiments, a root mean squared error optimization procedure is applied to obtain the best fit generalized extreme value distribution.

The parameters of the best fit generalized extreme value distribution are used to characterize the presence of high-frequency content in the image that corresponds to sharp transitions. Therefore, the use of extreme value distribution, in particular, generalized extreme value distribution contributes to the accurate determination of the sharpness metric.

Accordingly, the invention is at least in part based on the surprising finding that sharpness in the context of the invention can be determined particularly accurately by using generalized extreme value distribution.

In certain embodiments, the invention relates to the computer-implemented method for classification according to the invention, wherein the radial spectral power density is used to determine fractional power in at least one vessel segment.

In certain embodiments, the invention relates to the computer-implemented method for correction according to the invention, wherein the radial spectral power density is used to determine fractional power in at least one vessel segment.

In certain embodiments, the invention relates to the computer-implemented method for obtainment according to the invention, wherein the radial spectral power density is used to determine fractional power in at least one vessel segment.

The term "fractional power", as used herein, refers to an estimate of the total image area with high-frequency features. This estimate is obtained by comparison of structure-related image power to the total image power, wherein the structures are in a certain size range. The radial power spectral density function is considered as a power density function.

The fractional power can be determined from the radial power spectral density of the image by identifying a frequency band based on the expected characteristics of vessels. The fractional power can be determined as the fraction of the total power contained in the frequency band identified accordingly. Higher fractional power indicates more structures in the corresponding range, suggesting better sharpness and more likely presence of structures of interest such as vessels. Therefore, in some embodiments, the fractional power is computed for the high-pass-filtered image.

The fractional power can therefore be used to characterize the presence of sharp features in the vascular image. The total power in a selected band of frequencies and normalize it with total power. The band of frequencies is selected in accordance with the image details of interest, such as rapid variations.

Accordingly, the invention is at least in part based on the surprising finding that sharpness in the context of the invention can be determined particularly accurately by using the determination of fractional power in at least one vessel segment.

In certain embodiments, the invention relates to the computer-implemented method for classification according to the invention, wherein the L* channel metric is an L* channel-derived Form Factor and/or L* channel-derived Laplacian Energy.

In certain embodiments, the invention relates to the computer-implemented method for correction according to the invention, wherein the L* channel metric is an L* channel-derived Form Factor and/or L* channel-derived Laplacian Energy.

In certain embodiments, the invention relates the computer-implemented method for obtainment according to the invention, wherein the L* channel metric is an L* channel-derived Form Factor and/or L* channel-derived Laplacian Energy.

The term "Form Factor", as used herein, refers to a ratio of the standard deviation of the given data to the standard deviation values of the first and second derivatives of the data. The Form Factor characterizes the variability and complexity of the data or a region.

L* channel metrics comprise information that are particularly relevant for efficient quality assessment.

Accordingly, the invention is at least in part based on the surprising finding that sharpness in the context of the invention can be determined particularly accurately by using certain L* channel metrics.

In certain embodiments, the invention relates to the method of the invention, wherein the vascular image is a retinal image.

In certain embodiments, the invention relates to the computer-implemented method for generating a multi-scale Gabor filter response according to the invention, wherein the vascular image is a retinal image.

In certain embodiments, the invention relates to the computer-implemented method for classification according to the invention, wherein the vascular image is a retinal image.

In certain embodiments, the invention relates to the computer-implemented method for correction according to the invention, wherein the vascular image is a retinal image.

In certain embodiments, the invention relates to the computer-implemented method for obtainment according to the invention, wherein the vascular image is a retinal image.

The term "retinal image", as used herein, refers to any vascular image of a subject's eye. In some embodiments, the retinal image is a vascular image that comprises a subject's retina or a part thereof. In some embodiments, the retinal image is obtained by a technique selected from the group of direct ophthalmoscopy, indirect ophthalmoscopy, fundus imaging, optical coherence tomography (OCT), OCT angiography, autofluorescence imaging, and adaptive optics scanning laser ophthalmoscopy such as adaptive optics scanning laser ophthalmoscopy. Using the techniques known in the art, several aspects of the eye may be imaged and recorded, thus allowing for analysis of the eye. The retinal images may also be referred to as ophthalmic images, or fundus images, and the like in the art, the exact nomenclature used depending on some factors, such as the type of equipment used, part of the eye being imaged, or combinations thereof. The retinal image useful in the invention is a digital image, wherein the image is obtained directly from an imaging instrument as a digital image or an analog image that has been digitized using techniques known in the art.

In some embodiments, the invention relates to the method according to the invention, wherein the vascular image is a retinal image and the predefined image quality threshold pattern comprises a threshold to obtain an image and/or at least one class of images by the methods described herein to have sufficient quality for grading and/or diagnosis of at least one indication selected from the group retinopathy of prematurity, diabetic retinopathy, and aggressive posterior retinopathy of prematurity.

Retinal images, e.g., retinal images obtained from fundus cameras often have limitations of low contrast (such as the contrast between retinal vasculature and background), image noise and non-uniform illumination, especially towards the periphery of the retina.

Accordingly, the invention is at least in part based on the surprising finding that it is particularly accurate for retinal images.

In certain embodiments, the invention relates to the computer-implemented method for classification according to the invention, wherein the sharpness metric, the brightness metric, and/or the contrast metric determined in a field of view mask area of the retinal image.

In certain embodiments, the invention relates to the computer-implemented method for correction according to the invention, wherein the sharpness metric, the brightness metric, and/or the contrast metric determined in a field of view mask area of the retinal image.

In certain embodiments, the invention relates to the computer-implemented method for obtainment according to the invention, wherein the sharpness metric, the brightness metric, and/or the contrast metric determined in a field of view mask area of the retinal image.

The term "field of view mask area", as used herein, refers to the image area of the retinal image that represents the tissue. In some embodiments, the field of view mask is obtained by a method comprising the steps of: a) binarizing a retinal image; b) applying a morphological operator to separate tissue area from the non-tissue area; and c) obtaining a visual field mask from the morphological operators in step b). In some embodiments, the morphological operators described herein are selected from the group of Hit-or-miss transform, dilation, erosion, opening, closing, granulometry, thinning, skeletonization, ultimate erosion, flood filling and conditional bisector. Therefore, the field of view mask excludes the area(s) of the image that consist(s) of technical artefacts or comprise(s) to a large extent technical artefacts. Some methods for obtaining vascular images such as methods for obtaining retinal images generate black and/or blurry areas at the edges of the image do not represent the biology or the actual appearance of the captured tissue. In some embodiments, the field of view mask area excludes areas at the edges of the image comprising primarily blurry image parts. In some embodiments, the field of view mask area excludes areas at the edges of the image comprising primarily black pixels. In some embodiments, the field of view mask area is a roundish, elliptical or round shape on a rectangular image or square image.

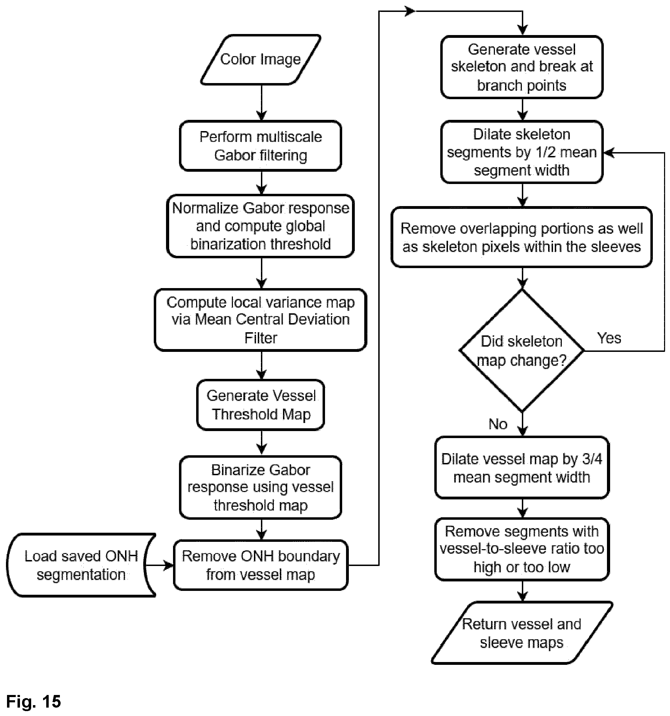

Edge artefacts, such as dark edge artefacts of a fundus image, can distort brightness measurements (see, e.g., Fig. 15 of PCT/CA2022/051047).

By the limitation of the image quality determination to an area within a field of view mask, the image quality pattern can embody the image quality that represents the biologic tissue on the image and is therefore primarily relevant for further uses such as grading and/or diagnosing.

In certain embodiments, the invention relates to the computer-implemented method for classification according to the invention, wherein the method comprises a step of extending the field of view mask area.

In certain embodiments, the invention relates to the computer-implemented method for correction according to the invention, wherein the method comprises a step of extending the field of view mask area.

In certain embodiments, the invention relates to the computer-implemented method for obtainment according to the invention, wherein the method comprises a step of extending the field of view mask area.

In some embodiments, the field of view mask area is extended by increasing the size of the field of view mask area with pixels having the average brightness of the brightness determined within the field of view mask.

In some embodiments, the field of view mask area is extended by increasing the size of the field of view mask area to a rectangle. In some embodiments, the field of view mask area is extended by increasing the size of the field of view mask area to a rectangle of the original vascular image. In some embodiments, the field of view mask area is extended by the steps described in Fig. 13.

By the extension of the FOV mask the artefacts that are produced by various filters when they encounter the abrupt change in intensity at the edge of the FOV are removed. This approach of extending the FOV mask allows a data window to be applied that gradually reduces the image intensity toward the edges, rather than abruptly as is the case with the FOV. Additionally, extending the FOV mask enables having consistent results from image to image, regardless of the size or shape of the original FOV.

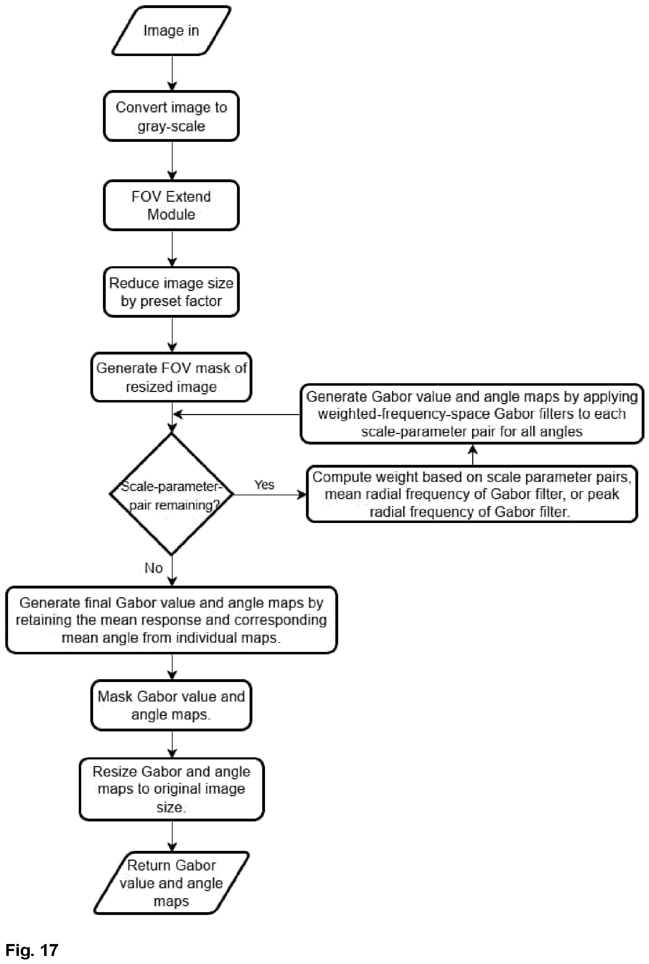

Therefore, extending the field of view mask to a more processable and/or standardized shape improves the methods described herein (see, e.g. Fig 17 of PCT/CA2022/051047).

Accordingly, the invention is at least in part based on the surprising finding that brightness in the context of the invention can be determined particularly accurately by using an extended field mask area.

In certain embodiments, the invention relates to the computer-implemented method for classification according to the invention, wherein the contrast metric comprises determining an ONH segmentation.

In certain embodiments, the invention relates to the computer-implemented method for correction according to the invention, wherein the contrast metric comprises determining of an ONH segmentation.

In certain embodiments, the invention relates to the computer-implemented method for obtainment according to the invention, wherein the contrast metric comprises determining an ONH segmentation.

Some methods for vessel detection cannot distinguish or cannot robustly distinguish between vessel and ONH. Therefore, the method of the invention is particularly accurate, if vessel segments and ONH segments are distinguishable e.g. by segmentation by separate methods.

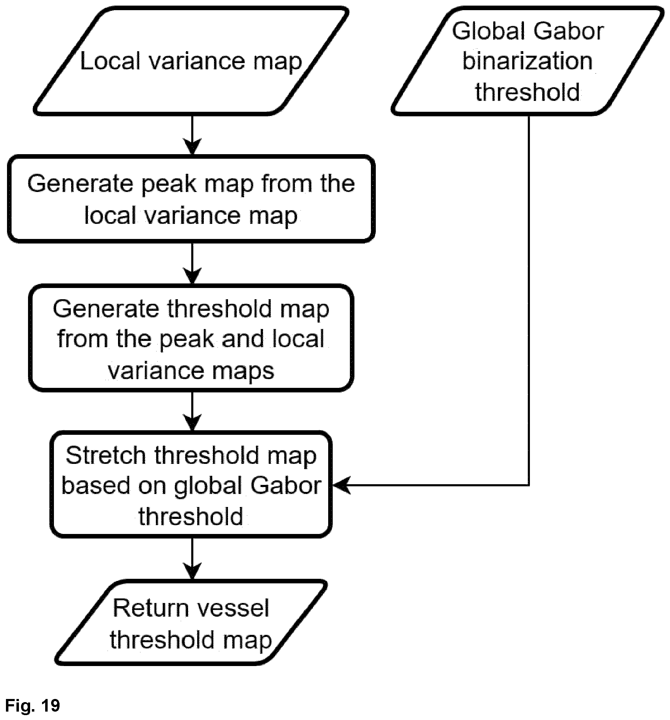

The term "ONH segmentation", as used herein, refers to segmentation that results in an optic nerve head area. In some embodiments, the optic nerve head area is identified by comparing the vascular image to an optic nerve head reference pattern. In some embodiments, several areas are detected during the process of ONH segmentation and are subsequently reduced (e.g., by exclusion of areas or area fusion) to one single optic nerve head area. In some embodiments, the optic nerve head reference pattern described herein is obtainable by a machine-learning technique. In some embodiments, a supervised machine learning technique is used to generate the optic nerve head reference pattern described herein. In some embodiments, the supervised machine learning technique described herein is a trained convolutional neural network, such as a deep convolutional neural network. In some embodiments, the supervised machine learning technique described herein is trained and/or validated using labeled data (see e.g., Fig. 19 and Fig. 21 of PCT/CA2022/051047).

The ONH and its center can be determined for example via two methods: 1. Applying phase-portrait analysis on the Gabor angle image 2. Inference using a pretrained deep-learning convolutional neural network meant for the detection of the ONH.

The optic nerve head on the vascular image comprises significant biological and diagnostic information. Therefore, the properties and/or the image quality of the ONH segment is particularly relevant for subsequent grading and/or diagnosing. An abnormal optic nerve head (e.g., an enlarged optic nerve head) may facilitate gradeability. Therefore, an image demonstrating an abnormal optic nerve head may be considered to have an increased corrected image quality score.

In some embodiments, at least one property of the ONH segment(s) influence(s) the corrected image quality score. In some embodiments, the property of the ONH segment(s) is at least one property selected from the group of location, form (e.g., circularity or aspect ratio), and size. In some embodiments, the vessel segment described herein is determined with the 1.1.2.2 vessel detection module (Fig. 11).

Accordingly, the invention is at least in part based on the surprising finding that contrast in the context of the invention can be determined particularly accurately by using ONH segmentation.

The present invention may be a system, a method, and/or a computer program product.

The computer program product may include a computer-readable storage medium (or media) having the computer-readable program instructions thereon for causing a processor to carry out embodiments of the invention such as the computer-implemented method for classification according to the invention and/or the computer-implemented method for obtainment according to the invention.

Computer-readable program instructions described herein can be downloaded to respective computing/processing devices from a computer-readable storage medium or to an external computer or external storage device via a network.

Computer-readable program instructions for carrying out operations of the present invention may be assembler instructions, instruction-set-architecture (ISA) instructions, machine instructions, machine-dependent instructions, microcode, firmware instructions, state-setting data, or either source code or object code written in any combination of one or more programming languages, including an object-oriented programming language such as Smalltalk, C++ or the like, and conventional procedural programming languages, such as the "C" programming language or similar programming languages.

The computer-readable program instructions may execute entirely on the user's computer, partly on the user's computer, as a stand-alone software package, partly on the user's computer and partly on a remote computer or entirely on the remote computer or server.

In certain embodiments, the invention relates to a storage device comprising one or more method(s) according to the invention.

In certain embodiments, the invention relates to a storage device comprising the computer-implemented method for generating a multi-scale Gabor filter response according to the invention.

In certain embodiments, the invention relates to a storage device comprising the computer-implemented method for classification according to the invention.

In certain embodiments, the invention relates to a storage device comprising the computer-implemented method for correction according to the invention.

In certain embodiments, the invention relates to a storage device comprising the computer-implemented method for obtainment according to the invention.

In certain embodiments, the invention relates to a storage device comprising the computer-implemented method for correction according to the invention and the computer-implemented method for obtainment according to the invention.

In certain embodiments, the invention relates to a storage device comprising the computer-implemented method for classification according to the invention and the computer-implemented method for obtainment according to the invention.

In certain embodiments, the invention relates to a storage device comprising the computer-implemented method for classification according to the invention and the computer-implemented method for correction according to the invention.

In certain embodiments, the invention relates to a storage device comprising the computer-implemented method for classification according to the invention, the computer-implemented method for correction according to the invention and the computer-implemented method for obtainment according to the invention.

In some embodiments, the methods described herein are comprised in form of computer executable instructions (e.g. in form of a program or software) on the storage device.

The term "storage device", as used herein, refers to any tangible device that can retain and store instructions for use by an instruction execution device.

In some embodiments, the storage device described herein is at least one selected from the group of electronic storage device, magnetic storage device, optical storage device, electromagnetic storage device, semiconductor storage device, any suitable combination thereof.

A non-exhaustive list of more specific examples of the storage device includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A storage device, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

In certain embodiments, the invention relates to a server comprising the storage device of the invention and a network connection for receiving data indicative for the vascular image.

In certain embodiments, the invention relates to a server comprising the storage device of the invention and at least one processing device capable of executing computer execution instructions and a network connection for receiving data indicative for the vascular image.

In certain embodiments, the invention relates to a system for capturing a quality-classified vascular image, wherein the system comprises a) an image capturing device; and b) i)at least one processing device capable of executing computer execution instructions and the storage device of the invention; and/or ii) a network connection to a server according to the invention.

The term "data indicative for the vascular image", as used herein, refers to any raw or processed data that describes the vascular image and/or properties of the vascular image.

The term "network connection", as used herein, refers to a communication channel of a data network. A communication channel can allow at least two computing systems to communicate data to one another. In some embodiments, the data network is selected from the group of the internet, a local area network, a wide area network, and a wireless network. The network may comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer-readable program instructions for storage in a computer-readable storage medium within the respective computing/processing device.

The server described herein, can receive the vascular image, process it according to the method of the invention, and provide a result. Sending the vascular image to a server reduces the requirements for processing power in the device that acquires the vascular image and enables the efficient processing of large datasets. In embodiments, wherein the invention relates to a server, the vascular image can be obtained acquired by any device that has a network connection. In some embodiments, the device for the acquirement of the vascular image is a mobile device.

The server may be connected to the device for the acquirement of the vascular image through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform embodiments of the present invention.

Accordingly, the server described herein, enables the efficient application of the methods of the invention.

In certain embodiments, the invention relates to a system for capturing a quality-classified vascular image, wherein the system comprises at least one processing device and the storage device of the invention.

In certain embodiments, the invention relates to a system for capturing a quality-classified vascular image, wherein the system comprises a network connection to the server of the invention.

In certain embodiments, the invention relates to a system for capturing a quality-classified vascular image, wherein the system comprises a) at least one processing device and the storage device of the invention; and b) a network connection to the server of the invention.

In some embodiments, the system described herein is a system selected from the group of portable imaging system, microscope-based imaging system, wide-field imaging system, automated imaging system, robotic imaging system, stereoscopic imaging system, and contact imaging system.

Embodiments of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

"a," "an," and "the" are used herein to refer to one or to more than one (i.e., to at least one, or to one or more) of the grammatical object of the article.

"or" should be understood to mean either one, both, or any combination thereof of the alternatives.

"and/or" should be understood to mean either one, or both of the alternatives.

Throughout this specification, unless the context requires otherwise, the words "comprise", "comprises" and "comprising" will be understood to imply the inclusion of a stated step or element or group of steps or elements but not the exclusion of any other step or element or group of steps or elements.

The terms "include" and "comprise" are used synonymously. "preferably" means one option out of a series of options not excluding other options. "e.g." means one example without restriction to the mentioned example. By "consisting of" is meant including, and limited to, whatever follows the phrase "consisting of."

The terms "about" or "approximately", as used herein, refer to "within 20%", more preferably "within 10%", and even more preferably "within 5%", of a given value or range.

Reference throughout this specification to "one embodiment", "an embodiment", "a particular embodiment", "a related embodiment", "a certain embodiment", "an additional embodiment", "some embodiments", "a specific embodiment" or "a further embodiment" or combinations thereof means that a particular feature, structure or characteristic described in connection with the embodiment is included in at least one embodiment of the present invention. Thus, the appearances of the foregoing phrases in various places throughout this specification are not necessarily all referring to the same embodiment. Furthermore, the particular features, structures, or characteristics may be combined in any suitable manner in one or more embodiments. It is also understood that the positive recitation of a feature in one embodiment, serves as a basis for excluding the feature in a particular embodiment.

Brief description of Figures

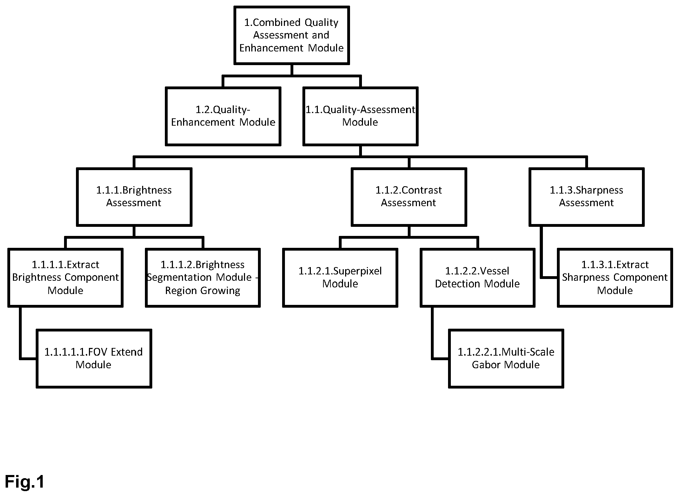

Fig. 1: Overview of method for classification of the quality of vascular images

Fig. 2: 1. Combined Quality Assessment and Enhancement Module

Fig. 3: 1.1. Quality-Assessment Module

Fig. 4: 1.2. Quality-Enhancement Module

Fig. 5: 1.1.1. Brightness Assessment

Fig. 6: 1.1.2. Contrast Assessment

Fig. 7: 1.1.3. Sharpness Assessment

Fig. 8: 1.1.1.1. Extract Brightness Component Module

Fig. 9: 1.1.1.2. Brightness Segmentation Module - Region Growing

Fig. 10: 1.1.2.1. Super-pixel Module

Fig. 11: 1.1.2.2. Vessel Detection Module

Fig. 12: 1.1.3.1. Extract Sharpness Component Module

Fig. 13: 1.1.1.1.1. FOV Extend Module

Fig. 14: 1.1.2.2.1. Multi-Scale Gabor Module

Fig. 15: 1. Vessel detection module

Fig. 16: 1.1 Gray-scale Enhancement Module

Fig. 17: 1.2 Multi-Scale Gabor Module

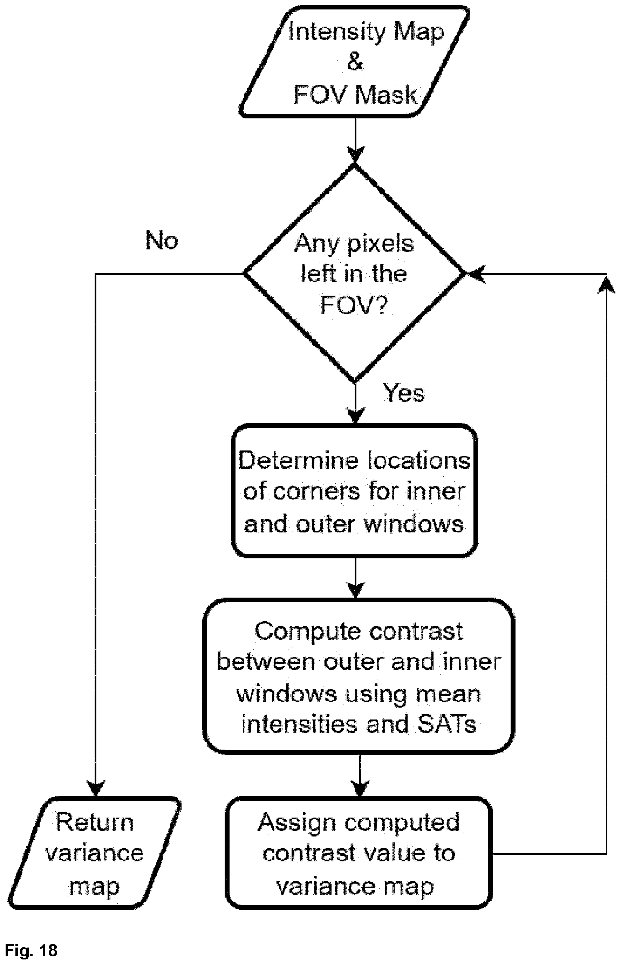

Fig. 18: 1.3 Mean Central Deviation Filter

Fig. 19: 1.4 Generate Vessel Threshold Map

Fig. 20:

A Multiscale Gabor_Otsu (single global Threshold method)

B Multiscale Gabor_RC (an arbitrarily defined single global threshold)

C Multiscale Gabor_ Adaptive Threshold Map

D Singlescale Gabor _Otsu (single global Threshold method)

E Singlescale Gabor_RC (an arbitrarily defined single global threshold)

F Singlescale Gabor _ Adaptive Threshold Map

G Weighted Multiscale Gabor_Otsu (single global Threshold method)

H Weighted Multiscale Gabor_ RC (an orbitarily defined single global threshold)

I Weighted Multiscale Gabor_ Adaptive Threshold Map

J original image

In general, the term "module," as used herein, refers to logic embodied in hardware or firmware, or to a collection of software instructions, possibly having entry and exit points, written in a programming language, such as, for example, Python, Java, Lua, C and/or C++. A software module may be compiled and linked into an executable program, installed in a dynamic link library, or may be written in an interpreted programming language such as, for example, BASIC, Perl, or Python. It will be appreciated that software modules may be callable from other modules or from themselves, and/or may be invoked in response to detected events or interrupts. Software modules configured for execution on computing devices may be provided on a computer-readable storage device. Such software code may be stored, partially or fully, on a memory device of the executing computing device, for execution by the computing device. Software instructions may be embedded in firmware, such as an EPROM. It will be further appreciated that hardware modules may be comprised of connected logic units, such as gates and flip-flops, and/or may be comprised of programmable units, such as programmable gate arrays or processors. The block diagrams disclosed herein may be implemented as modules. The modules described herein are preferably implemented as software modules but may be represented in hardware or firmware. Generally, the modules described herein refer to logical modules that may be combined with other modules or divided into sub-modules despite their physical organization or storage. Therefore, the modules described herein may be combined in any way that enables the desired result. In some embodiments, the modules are combined as described in Fig. 15.

Unless otherwise defined, all technical and scientific terms used herein have the same meaning as commonly understood by one of ordinary skill in the art to which this invention pertains. Although methods and materials similar or equivalent to those described herein can be used in the practice or testing of the present invention, suitable methods and materials are described below. In case of conflict, the present specification, including definitions, will control. In addition, the materials, methods, and examples are illustrative only and not intended to be limiting.

The general methods and techniques described herein may be performed according to conventional methods well known in the art and as described in various general and more specific references that are cited and discussed throughout the present specification unless otherwise indicated.

While aspects of the invention are illustrated and described in detail in the figures and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below.

Although the foregoing invention has been described in some detail by way of illustration and example for purposes of clarity of understanding, it will be obvious that certain changes and modifications may be practiced within the scope of the appended claims.

Examples

## Example 1

The modules were implemented using Matlab software and the modules as described in Fig. 1 to 14. The classification for quality was done using a trained linear discriminant classifier that via training, determines certain boundaries that will separate the quality of images into 3 classes. The following Matlab packages were used: Statistics and Machine Learning Toolbox, Optimization Toolbox, Global Optimization Toolbox, Image Processing Toolbox. The linear discriminant classifier was trained on a set of 500 images that were labelled for image quality. Two imaging technicians were employed to provide ratings of 1 (poor) to 3 (good) for overall image quality, as well as sharpness, contrast, and brightness individually. The images were obtained from healthy and non-healthy patients of varying severity. A subset of these images that were identically labelled by both were used for training/testing. For testing/training 334 images were used. Random splits or fold as well as the leave-one-out approach were used for training and testing with this set. The leave-one-out method was used for classification, i.e., at each step, 1 image was kept for testing and 333 are used for training.

Statistical results for validation on 334 (out of 500) images that had consensus:

- Sensitivity of Class 1: 0.86

- Specificity of Class 1: 0.99

- PPV of Class 1: 0.95

- NPV of Class 1: 0.98

- Sensitivity of Class 2: 0.97

- Specificity of Class 2: 0.86

- PPV of Class 2: 0.92

- NPV of Class 2: 0.95

- Sensitivity of Class 3: 0.86

- Specificity of Class 3: 0.98

- PPV of Class 3: 0.94

- NPV of Class 3: 0.96

- Avg. Sen. = 90%

- Avg. Spe. = 95%

- Avg. PPV = 94%

- Avg. NPV = 96%

| True Class | 1 | 37 | 6 | 0 | | 37/43 = 86.05% | Class. Acc. |
|---|---|---|---|---|---|---|---|
| | 2 | 2 | 206 | 4 | | 206/212 = 97.17% | |
| | 3 | 0 | 11 | 68 | | 68/79 = 86.08% | |
| | | 1 | 2 | 3 | | **311/334 = 93.11%** | |

Predicted Class

**Example 2** Field of view mask generation

The field of view mask generation comprised the steps of:

- Saturate top and bottom limits of gray-scale value (clip) and adjust the original intensity values to the new limit

- Apply gamma correction to the gray-scale image

- Perform Ridler-Calvard binarization

- Keep the largest size binary object left as the FOV candidate

- Pad the image for post processing

- Apply morphological operation of closing followed by erosion with a disk element, and finally filling of holes

- Remove padding, produce final FOV

Exemplified results are demonstrated in Fig. 15 of PCT/CA2022/051047.

**Example 3**

Image correction by Homomorphic_contrast_sharpness exemplified in Fig. 18 of PCT/CA2022/051047.

**Example 4** Vessel and ONH Detection

For an average vessel thickness of 15 pixels, the thickness parameter of the Gabor filter may be set t=10 to begin with. Subsequently a separate training set was used to amend this parameter and their values to determine a combination of t and I that provides the best multiscale results. The training set for vessel detection was a combination of the publicly available datasets of HRF, DRHAGIS, and HeyMed, which provide hand-annotations. We ran the fileters and run Reciever Operating Charactistics (ROC) analysis against that and the ground-truth (hand annotations). The parameters were adjusted to optimize for the highest area under the ROC curve. (Fig. 19 and Fig. 21 of PCT/CA2022/051047)

**Example 5** Lesion segmentation

The lesion detection method is developed and tested on a collection of narrow-field images. Those images were then hand-annotated by an ophthalmology expert. In total, 2,095 field-of-views were used to create annotated masks of the optic disc (869), exudates (554), hemorrhages (1,459) and microaneurysms (1,997). The main validation score use for training of the classifier is classification accuracy per pixel, per lesion and computed as the Dice Score.

- The module uses the LinkNet architecture coupled with transfer learning done via a ResNet network as the encoder, where the final layer of the encoder was dropped and retrained with the hand-annotated retinal images.

- The color image preprocessing step involves performing enhancement techniques such as histogram equalization to even out the dynamic range of the image. The module is trained with augmented data that consist of, but not limited to, rotation, flipping, changes of contrast, brightness and hue. There are four trained models each for detection of three types of lesions and the optic-nerve head. Each provide a separate probability map, and the algorithm works to resolve all overlapping areas and judges on which, if any of the lesions, are truly at that pixel location.

**Example 6:**

1 Vessel Detection Module

Extract green channel from color image.

Preform contrast enhancement on green channel per module (1.1 Gray-scale Enhancement)

Extend retinal field of view on green channel (as previously done in the image-quality patent) to prevent edge artifacts.
Perform Weighted Multi-Scale Gabor filtering on modified green channel per module 1.2 Multiscale Gabor.
Normalize the weighted Gabor response map.
Compute local variance map from the modified green channel per module 1.3 Mean Central-Deviation Filter. To compute local variance map, two window sizes need to be defined. A larger (outer) window and a smaller (inner) window, which will be centred on the pixel of interest.

Generate local threshold map per module (1.4 Generate Vessel Threshold Map)

Use scaled and corrected threshold map to binarize the Weighted Multi-Scale Gabor magnitude response map as computed in step 4

1.1 Gray-scale Enhancement Module

Extend image FOV (as previously done in the image-quality patent).
Compute image brightness component (as previously done in 1.1.1.1 Brightness component module of PCT/CA2022/051047).
Compute adaptive gamma correction map using brightness component.

Adaptive gamma correction map is computed as: $\gamma(x,y) = [\![ \gamma\_b ]\!] ^\wedge(2B(x,y)-1$
Here $\gamma$_b is a base gamma value, which could be user input, or data-base dependent, or chosen in another manner, such as image statistics, and $B(x,y)$ is the brightness component of the image.
Apply a 2-dimensional Hamming window with radius equal to the extended FOV radius.

Lowpass filter image in frequency domain to remove high-frequency noise, and take back to image domain

Gamma-correct image using the previously obtained adaptive gamma map.

Compute local contrast map via the gamma-corrected image.

Apply adaptive unsharp masking using local contrast map.

Apply median filtering to remove noise introduced via unsharp masking.

Return enhanced gray-scale image.

1.2 Multi-Scale Gabor Module

Scale image by given scale factor.

The scale factor could be user input, or data-base dependent, or chosen in another manner, such as image statistics, or image size.

The scale factor is usually less than or equal to one to reduce computation time. A scale factor greater than one would not introduce new information into the image and could unnecessarily lead to artifacts.

For each scale-factor (tau/el) pair:

For each filter angle:

Compute weight based on scale parameter pairs, mean radial frequency of Gabor filter, or peak radial frequency of Gabor filter.

Compute and apply weighted Gabor filter for the current scale-factor pair to the inverted image for each filter angle.

Keep the maximum magnitude response over all filter angles for each pixel location, and the corresponding angle.

Mask the magnitude response and angle maps to the original field of view.

Compute the mean of the magnitude response and the angular mean of the angle maps.

Return magnitude response and angle maps, and computed means.

1.3 Mean Central Deviation Filter

For each pixel location in the field of view, compute the mean pixel intensity within both large and small windows centered on the pixel.

Construct the local-intensity variance map from the contrasts between the large and small windows.

Return local-intensity variance map.

1.4 Generate Vessel Threshold Map

Threshold local variance map by setting pixels below some constant times the mean pixel value to zero, in order to isolate regions of high local variance on the local variance map.

Smoothen the map of isolated peaks by applying a smoothing or blurring filter (e.g. Gaussian, mean, median) and sum the results with local variance map to create accentuated variance map.

Compute a single binarization threshold on modified green channel using a technique of choice (e.g. Yanni and Horne or Otsu, or Niblack). This could be obtained using a global or local thresholding technique. If using a local technique, the result will be a threshold map.

Normalize accentuated variance map and then multiply by the binarization threshold to scale accentuated variance map between a min of zero and a max equal to the binarization threshold, previously obtained.

Multiply scaled variance map by a correction factor, which could be user input, or data-base dependent, or chosen in another manner, such as image statistics.

Return local threshold map (the terms "adaptive threshold map" and "local threshold map" are used herein interchangeably).

**Example 7**

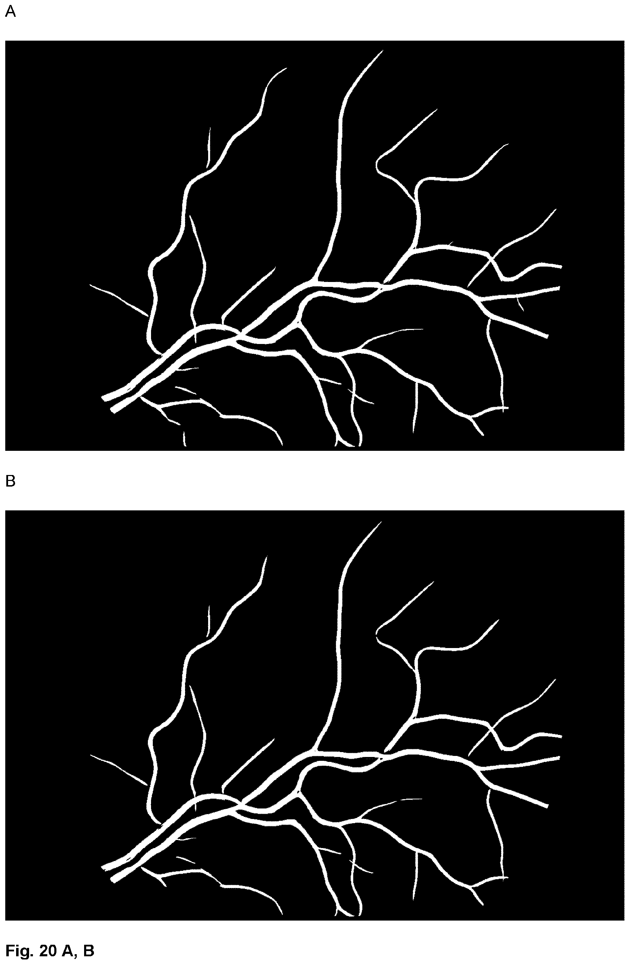

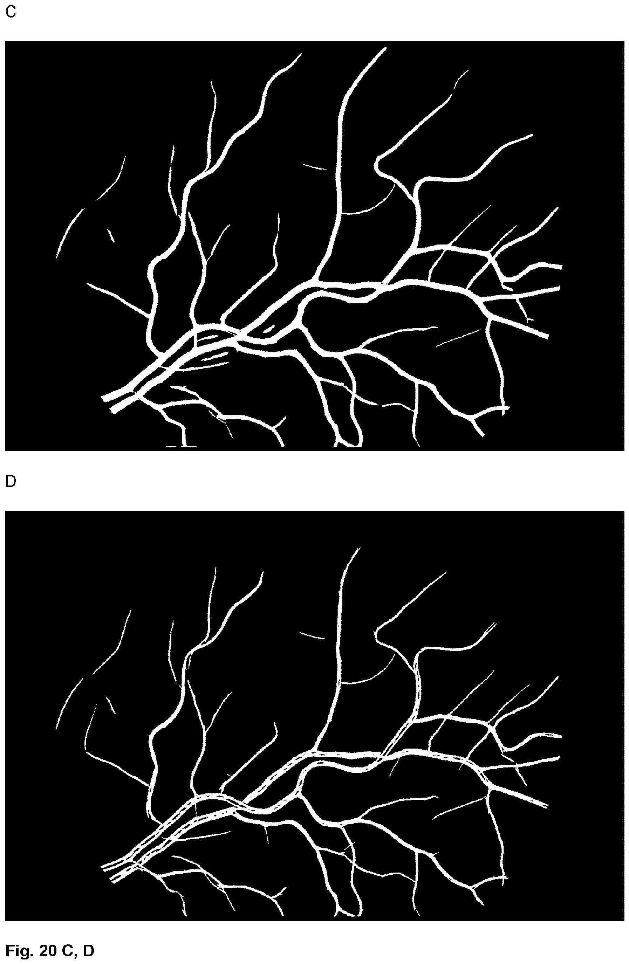

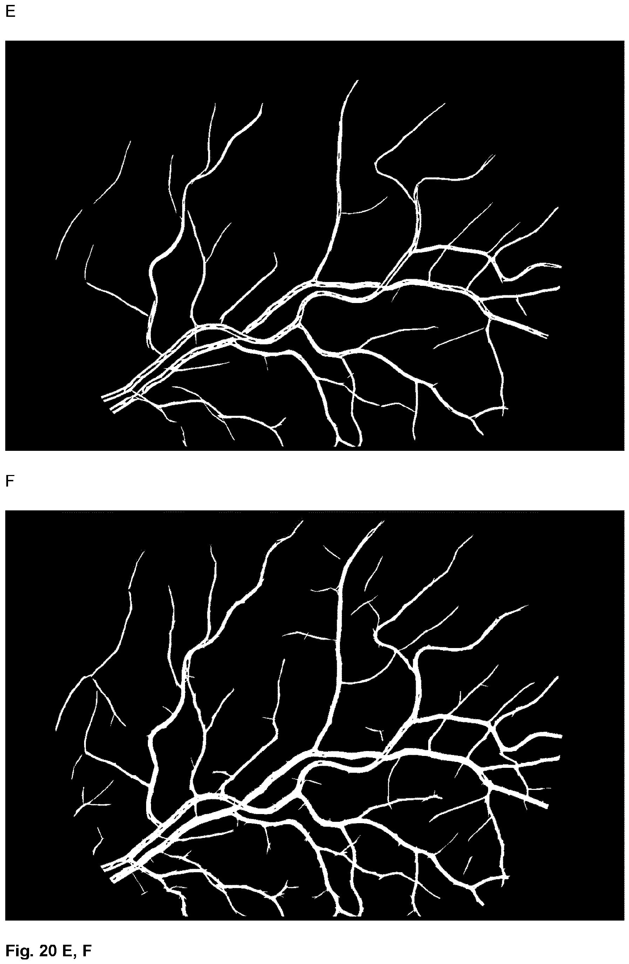

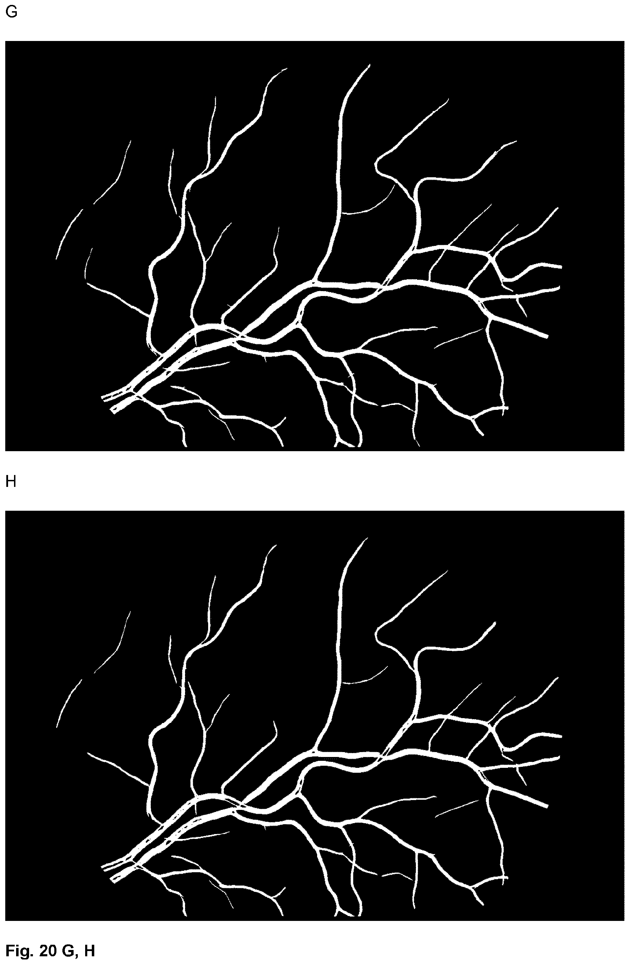

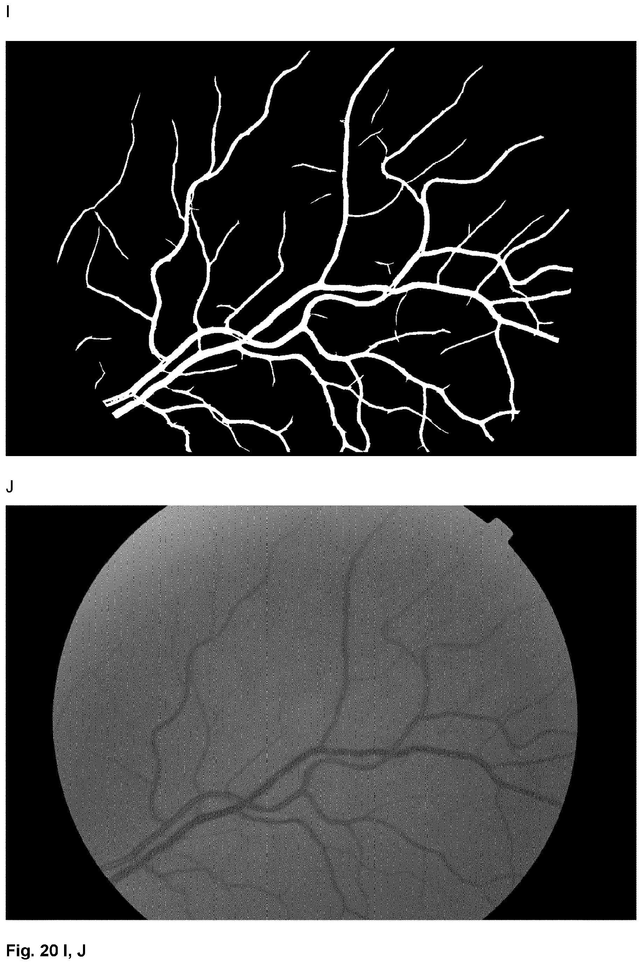

The modules were implemented using Matlab software and the modules as described in Fig. 15 to 19. The inventors compared the method using a weighted multiscale Gabor in combination with an Adaptive Threshold Map to non-weighted (multiscale) Gabor filters and known thresholding methods (i.e. RC and Otsu) (Fig. 20).

Parameters used in this example:

(multi-scale)Tau: [3,3,3,4,4,4,5.5,5.5,7.25,7.25,10,10,13.5,13.5,17.5,17.5,23,23] EI: [4,6,8,3.5,5,6.5,3,4,2.25,3,1.75,2.25,1.5,2,1.2, 1.75, 1.1,1.5]

The Tau and EI values are taken as pairs according to their position in the vectors For example, the first pair would be the first value in each vector: Tau = 3 and EI = 4, the second pair would be Tau = 3, EI = 6, etc. The final pair would be Tau = 23, EI = 1.5.

The weights were computed as described earlier: The ratio of the radial distance (distance from the filter center) of the maximum filter location to the distance to one filter corner (maximum frequency in both x and y directions) was raised to the power of 0.25.

Gabor angles: 0,2,4,...,178 (0 to 178 in steps of 2)

(single-scale)Tau: 8 EI: 3.5

Gabor Scale Factor: 0.5 (used to resize image prior to Gabor filter application)

FFT Size: 8192 (image is padded to this size prior to Fourier transform)

Low-Pass cut-off: 0.1*FFT size (Cut off frequency for low-pass filtering)

Low-Pass Butterworth Filter Order: 2 (order of Butterworth filter)

Unsharp Masking Multiplier: 3 (used to control the amount of sharpening)

Outer Window Size: 65 (For local variance map computation)

Inner Window Size: 3 (For local variance map computation)

Base Gamma: 2.5 (Base gamma value in adaptive gamma correction)

High local variance cut-off: 1.25 (Multiplied by mean of variance map to isolate peaks)

Final Threshold Tuning: 0.9 (Multiplied by Binarization threshold to obtain final threshold map scale)

**Claims**

1. A computer-implemented method for generating a multi-scale Gabor filter response indicative of spatial and/or geometric vessel properties in a vascular image, the method comprising the steps of:

   a) retrieving a plurality of pixels of interest of a vascular image;
   b) applying a multi-scale Gabor filter to the pixels of interest to obtain at least a first and a second Gabor filter response, wherein the Gabor filter response comprises an individual Gabor filter response of each pixel of interest and wherein the multiscale Gabor filter comprises:

   i) a first Gabor filter comprising a first Tau and a first EI; and
   ii) a second Gabor filter comprising a second Tau and a second EI; wherein the first Tau differs from the second Tau and/or wherein the first EI differs from the second EI;

   c) determining a weighting factor based on a Tau- and/or EI-dependent filter characteristic;
   d) obtaining a weighed Gabor filter response by weighting at least one of the individual Gabor filter responses of at least one of the Gabor filter responses based on the weighting factor; and
   e) generating a multi-scale Gabor filter response indicative of the spatial and/or geometric vessel properties in the vascular image by combining and/or selecting individual Gabor filter magnitudes from at least two Gabor filter responses, wherein at least one of the Gabor filter responses is the weighted Gabor filter response.

2. The method of claim 1, wherein the method comprises a step of selecting Tau and/or EI based on a vascular image property, preferably wherein the vascular image property is at least one selected from the group consisting of: image size, magnification level and estimated noise.

3. The method of claim 1 or 2, wherein the method comprises a step of scaling the vascular image and/or removing artefacts in the vascular image to obtain the pixels of interest of the vascular image.

4. The method of any one of claims 1 to 3, wherein the method comprises a step of adjusting gamma values of the vascular image, preferably wherein the method comprises a step of a) adjusting gamma values of the vascular image; and b) applying noise filtering and/or unsharp masking.

5. The method of any one of claims 1 to 4, wherein the Tau- and/or El-dependent filter characteristic comprises or consists of a mean frequency and/or a peak frequency.

6. A method for segmenting vessels in a vascular image, the method comprising the steps of:

   a) retrieving and/or generating a multi-scale Gabor filter response according to the method of any one of claims 1 to 5,
   b) segmenting a vessel in the vascular image applying a segmentation algorithm to the multi-scale Gabor filter response,

   preferably, wherein the segmentation algorithm comprises a thresholding algorithm.

7. The method of claim 6, wherein the segmentation algorithm comprises a thresholding algorithm and wherein the thresholding algorithm comprises generating a local intensity variance map, wherein the local intensity variance map is determined by comparing the contrast between a smaller pixel intensity window and a lager pixel intensity window of a relevant pixel of the vascular image, wherein the pixel intensity windows are indicative of the brightness of an area surrounding the relevant pixel of the vascular image.

8. A method for extracting features of vessels in a vascular image, the method comprising the steps of:

   a) retrieving and/or generating a multi-scale Gabor filter response according to the method of any one of claims 1 to 5, and/or segmenting vessels in a vascular image according to the method of any one claims 6 to 7; and
   b) extracting features of the vessels in the vascular image by interpreting the multi-scale Gabor filter response and/or the segments.

9. A computer-implemented method for classification of the quality of a vascular image, the method comprising the steps of:

   a) determining an image quality pattern of a vascular image based on a multi-scale Gabor filter response, a segmented vessel and/or an extracted feature; wherein the multi-scale Gabor filter response is generated according to the method of any one of claims 1 to 5, the segmented vessel is segmented according to the method of any one of claims 6 to 7 and the extracted feature is extracted according to the method of claim 8; preferably based on i) the multi-scale Gabor filter response, the segmented vessels and/or the extracted feature, and ii) at least one metric of the vascular image selected from the group consisting of: sharpness metric, a brightness metric, and a contrast metric, wherein the sharpness metric comprises determining in at least two areas in the vascular image a spatial orientation of edges and frequency variation, wherein frequency variation is the variation in at least a part of the frequency domain of the image, the brightness metric, wherein the brightness metric is indicative of brightness-derived quality parameters and comprises determining non-uniformity of the brightness of the image, and the contrast metric comprises determining a global contrast;
   b) comparing the image quality pattern obtained in (a) with a predefined image quality threshold pattern, wherein the quality threshold pattern comprises at least one threshold and/or a classification model comprising or consisting of a set of weights; and
   c). classifying the quality of the vascular image, wherein the image quality is classified based on the comparison of (b), in particular wherein the image quality is classified as having high quality if the image quality pattern is above the predefined image quality threshold pattern and wherein the image quality is classified as having low quality if the image quality pattern is below the predefined image quality threshold pattern.

10. A computer-implemented method for correction of the quality of a vascular image, the method comprising the steps of:

i. retrieving a vascular image classified as having low quality according to the method of claim 9;

ii. retrieving or determining a multi-scale Gabor filter response, a segmented vessel and/or an extracted feature; wherein the multi-scale Gabor filter response is generated according to the method of any one of claims 1 to 5 and the segmented vessel is segmented according to the method of any one of claims 6 to 7 and the extracted feature is extracted according to the method of claim 8;

preferably retrieving or determining I) the multi-scale Gabor filter response, the segmented vessels and/or the extracted feature and II) a sharpness metric, a brightness metric, and/or a contrast metric of the vascular image, wherein the sharpness metric comprises determining of a spatial orientation and frequency variation of at least two areas in the vascular image, the brightness metric comprises comparing brightness values of the vascular image to a brightness reference image, and the contrast metric comprises determining a global contrast;

iii. comparing the multi-scale Gabor filter response, the segmented vessels and/or the extracted feature to an enhancement threshold pattern;

preferably comparing the I) the multi-scale Gabor filter response, the segmented vessels and/or the extracted feature and II) the sharpness metric, the brightness metric, and/or the contrast metric to an enhancement threshold pattern;

iv. correcting the quality of the vascular image by employing, at least one technique selected from the group of sharpness correction, brightness correction, and contrast correction; wherein the selection of the technique is based on the comparison in step ii).

**11.** A computer-implemented method for classification of quality enhanceability of a vascular image, the method comprising the steps of:

i. retrieving a vascular image that is corrected according to the method of claim 10;

ii. determining a corrected image quality pattern of the corrected vascular image based on a multi-scale Gabor filter response, a segmented vessel and/or an extracted feature; wherein the multi-scale Gabor filter response is generated according to the method of any one of claims 1 to 5 and the segmented vessel is segmented according to the method of any one of claims 6 to 7 and the extracted feature is extracted according to the method of claim 8;

preferably retrieving or determining I) the multi-scale Gabor filter response, the segmented vessels and/or the extracted feature and II) a sharpness metric, a brightness metric, and/or a contrast metric of the corrected vascular image, wherein the sharpness metric comprises determining a spatial orientation and frequency variation of at least two areas in the vascular image, the brightness metric comprises comparing the brightness values of the corrected vascular image to a brightness reference image; and the contrast metric comprises determining global contrast;

iii. comparing the difference between the corrected image quality pattern and the image quality pattern to an enhanceability threshold pattern; and

iv. classifying quality enhanceability of the vascular image, wherein the vascular image is classified based on the comparison of step (iii), in particular wherein the vascular image is classified as enhanceable if the difference in step (iii) is above the enhanceability threshold pattern and wherein the vascular image is classified as not enhanceable if the difference in step (iii) is below the enhanceability threshold pattern.

**12.** A computer-implemented method for classification of the quality of a vascular image, the method comprising the steps of:

I. classifying the quality of a vascular image according to the method of claim 9;

II. correcting the quality of the vascular image according to the method of claim 10, if the vascular image is classified as having low quality according to step I.;

III. classifying the quality of the corrected vascular image according to the method of claim 9, if the vascular image is classified as having low quality according to step I.; and

IV. classifying the vascular image as having good quality if the vascular image and/or the corrected vascular image are/is classified as having high quality.

preferably the method additionally comprising the steps of:

1) classifying quality enhanceability of the corrected vascular image according to the method of claim 11, if the vascular image was classified as having low quality according to step I.; and

2) classifying the vascular image as having enhanceable quality if the vascular image and the corrected vascular image are determined as having low quality and the corrected vascular image is classified as enhanceable in step 1).

and/or the method further comprising the steps of:

I. classifying quality enhanceability of the corrected vascular image according to the method of claim 11; and
II. correcting the quality of the corrected vascular image according to the method of claim 10 if the corrected vascular image is classified as enhanceable in step IV) and repeating the correction of the corrected vascular image quality image according to the method of claim 10, the classification of the quality of the corrected vascular image according to the method of claim 9 and the classification of the quality enhanceability of the corrected vascular image according to the method of claim 11 until the corrected vascular image is not classified as enhancable according to the method of claim 11.

13. A computer-implemented method for obtainment of a quality enhanced vascular image, the method comprising the steps of:

i. correcting the quality of a vascular image according to the method of claim 10;
ii. classifying quality in the corrected vascular image according to the method of claim 9;
iii. obtaining the quality enhanced vascular image by storing the corrected vascular image if the image is classified as having high quality in step ii).

preferably, the method further comprising the steps of:

1. classifying quality enhanceability of the corrected vascular image according to the method of claim 11 if the corrected vascular image is classified as having low quality in step ii);
2. correcting the quality of the corrected vascular image according to the method of claim 10 and repeating the correction if the corrected vascular image remains being classified as enhanceable.

14. The computer-implemented method for classification according to any one of the claims 9, 11 to 12, the computer-implemented method for correction according to claim 10 or the computer-implemented method for obtainment according to claim 13, wherein the brightness metric determination comprises the steps of:

a) segmentation of the vascular image;
b) comparison of a segment to a segment reference pattern; and
c) determining based whether the brightness of the segment is indicative of anatomical brightness or quality-related brightness alterations.

preferably, wherein the segment is a segment with having an abnormal brightness level, wherein an abnormal brightness level is a brightness level below a minimal brightness threshold value or a brightness level above a maximal brightness threshold value,
and/or wherein the brightness metric comprises the segmentation of the vascular image comprises using a fuzzy membership function and/or region growing segmentation.

15. The method according to any one of claims 1 to 14, wherein the vascular image is a retinal image.

**Fig.1**

Images in

Assessment Module:
Returns index/metric that
Identifies image quality.

Good Quality

Poor Quality

Unusable images
are removed

Image Enhancement Module:
Returns enhanced Images

No

% increase in
image quality
> threshold?

Compute change
in image metrics.

Poor Quality

Assessment Module:
Returns index/metric that
Identifies image quality.

Good Quality

Yes

Any images
left to
process?

Yes

Images not
requiring
enhancement
are stored

No

End

**Fig. 2**

Fig. 3

Images in

Load
image-quality
scores

Determine which types of
enhancement need to be
performed. Apply the appropriate
filters.

Correct Focus:
Apply unsharp masking, ...

Correct Illumination:
Apply Homomorphic filter, ...

Correct Image Contrast:
Apply Histogram Equalization,...

Quality Assessment
Module

Additional filtering
required?

Yes

No

Enhanced Images

**Fig. 4**

Image in

Get Image Brightness Component (BC) and its Fourier Transform using the Extract Brightness Component Module.

Brightness Segmentation Module *

Compute **angular spectral power density** of the BC, and its standard deviation, entropy and coefficient of variation.

Compute **image moments** of the BC:
- Cartesian
- Legendre
- Zernike

Compute the mean, standard deviation, skewness, kurtosis, and coefficient of variation of the **BC histogram**.

Compute **radial spectral power density** of the BC, and its standard deviation, kurtosis, and entropy.

Compute distance of **angular spectral power density** from an ideal one.

Compute distance of **radial spectral power density** from an ideal one.

Combine metrics into array.

Return metrics

*Regions in segmented image will be compared to other segmentation results to determine if brighness variation is due to physiology/pathology or poor image quality.

**Fig. 5**

Fig. 6

**Fig. 7**

**Fig. 8**

Note: Segmentation is done using a modified fuzzy region growing method. This method is designed to handle multiple adjacent regions via a provisional pixel assignement strategy.

Region membership values are obtained using fuzzy membership computed with a contrast function.

Image in

Generate list of seed pixels.

Next seed pixel not assigned to a region is selected as the seed for current region to grow.

Locate immediate boundary pixels of current region. (i.e. pixels outside of but adjacent to region and not absolute members of another region.) Both absolute and provisional members are considered members of the region being grown.

Compute fuzzy membership function between each pixel and the current region.

For each boundary pixel, determine if it is to be added to the region (either absolutely or provisionally) or rejected.

Any pixels added to region?    Yes

No

Fill small holes by merging them with larger surrounding region.

Any seed pixels remain?    Yes

No

For all previsional pixels, merge them with the best-fit region (i.e. highest membership function value).

Find small regions and merge with adjacent region with highest fuzzy membership value.

Return segmentation data

**Fig. 9**

53

Image in

Add initial seed pixel to first superpixel (SP).

Include new pixel neighbours in SP boundary

Compute distance from mean SP colour to each boundary pixel colour

Find boundary pixel with closest colour to SP mean.

Does it meet threshold for inclusion in SP?

Yes → Add pixel to current SP

No

Are all image pixels assigned to a SP?

No

Yes

Current SP generation complete. Begin procedure for next SP.

Identify new seed pixel as SP boundary pixel having colour closest to its neighbouring SP.

Merge SPs smaller than preset threshold with neighbour SPs that have closest colour.

Return SP data

**Fig. 10**

Image in

Compute multi-scale
Gabor response

Normalize and
threshold Gabor
response.

Binarize thresholded
Gabor response.

Load saved ONH
segmentation → Remove ONH
boundary from vessel
map.

Generate vessel
skeleton and break at
branch points.

Dilate skeleton
segments by 1/2 mean
segment width.*

Remove overlapping portions of
sleeves. Also remove skeleton
pixels within these regions.

Did skeleton
map change? — Yes

No

Dilate vessel map by
3/4 mean segment
width.

Remove segments with
vessel-to-sleeve ratio
too high or too low.

Return vessel and
sleeve maps.

*On the first pass use 1/2
overall mean vessel width
computed from full vessel
map.

**Fig. 11**

Fig. 12

**Fig. 13**

Fig. 14

**Fig. 15**

Fig. 16

**Fig. 17**

Fig. 18

Local variance map

Global Gabor binarization threshold

Generate peak map from the local variance map

Generate threshold map from the peak and local variance maps

Stretch threshold map based on global Gabor threshold

Return vessel threshold map

**Fig. 19**

A

B

Fig. 20 A, B

C

D

**Fig. 20 C, D**

E

F

**Fig. 20 E, F**

G

H

**Fig. 20 G, H**

I

J

**Fig. 20 I, J**

Europäisches
Patentamt

European
Patent Office

Office européen
des brevets

# EUROPEAN SEARCH REPORT

**Application Number**

EP 23 15 0473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 712 526 A (UNIV HANGZHOU DIANZI) 27 April 2021 (2021-04-27) <br> * abstract * <br> * "Technical field" section * <br> * "Summary of the invention" section * <br> ----- | 1-6,8,15 | INV. <br> G06T7/11 <br> G06T7/136 <br> G06T7/60 <br> G06T7/00 <br> G06T5/00 |
| A | YU SHUANG ET AL: "Automatic detection of neovascularization on optic disk region with feature extraction and support vector machine", <br> 2016 38TH ANNUAL INTERNATIONAL CONFERENCE OF THE IEEE ENGINEERING IN MEDICINE AND BIOLOGY SOCIETY (EMBC), IEEE, <br> 16 August 2016 (2016-08-16), pages 1324-1327, XP032979403, <br> DOI: 10.1109/EMBC.2016.7590951 <br> * the whole document * <br> ----- | 1-8,15 | |
| A | KIRBAS AND F QUEK C: "A REVIEW OF VESSEL EXTRACTION TECHNIQUES AND ALGORITHMS", <br> ACM COMPUTING SURVEYS, ACM, NEW YORK, NY, US, US, <br> vol. 36, no. 2, <br> 1 January 2004 (2004-01-01), pages 81-121, XP002486186, <br> ISSN: 0360-0300, DOI: 10.1145/1031120.1031121 <br> * the whole document * <br> ----- | 1-8,15 | |

**TECHNICAL FIELDS SEARCHED (IPC)**

G06T

The present search report has been drawn up for all claims

| Place of search | Date of completion of the search | Examiner |
|---|---|---|
| Munich | 31 July 2023 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

[X] None of the further search fees have been paid within the fixed time limit. The present European search report has been drawn up for those parts of the European patent application which relate to the invention first mentioned in the claims, namely claims:

1-8, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

The Search Division considers that the present European patent application does not comply with the requirements of unity of invention and relates to several inventions or groups of inventions, namely:

```
        1. claims: 1-8, 15

            First group of inventions

    1.1. claims: 1-5, 15

            Computation of a multi-scale Gabor filter response
            indicative of spatial and/or geometric vessel properties in
            a vascular image.

    1.2. claims: 6, 7

            Segmentation of vessels in a vascular image.

    1.3. claim: 8

            Extraction of features of vessels in a vascular image.
                            ---


        2. claims: 9-14

            Second group of inventions
                            ---
```

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 23 15 0473

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2023

| Patent document cited in search report | | Publication date | Patent family member(s) | Publication date |
|---|---|---|---|---|
| CN 112712526 | A | 27-04-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2022051047 W

**Non-patent literature cited in the description**

- **MOCCIA, S. et al.** *Computer methods and programs in biomedicine,* 2018, vol. 158, 71-91
- **DEHKORDI et al.** *Journal of medical signals and sensors,* 2011, vol. 1 (1), 49
- **KIRBAS, C. ; QUEK, F.** *ACM Computing Surveys (CSUR),* 2004, vol. 36 (2), 81-121
- **R. RANGAYYAN.** Biomedical Signal Analysis. John Wiley & Sons, 2015